# EUROPEAN PATENT SPECIFICATION

(11) **EP 0 559 633 B1**
(45) Date of publication and mention of the grant of the patent: **30.06.1999**
(21) Application number: 93870038.2
(22) Date of filing: 02.03.1993
(51) Int. Cl.: C08F 4/602, C08F 4/606

(54) **Catalyst formulation and polymerization processes**
Katalysatorformulierung und Polymerisationsverfahren
Formulation de catalyseur et procédés de polymérisation

(30) Priority: 04.03.1992 US 846930; 04.03.1992 US 846540; 04.03.1992 US 846689
(43) Date of publication of application: 08.09.1993
(73) Proprietor: FINA TECHNOLOGY, INC., Plano, Texas 75024 (US)
(72) Inventor: Shamshoum, Edwar, Houston, Texas 77062 (US); Rauscher, David, Webster, Texas 77598 (US); Malbari, Shabbir, Pasadena, Texas 77505 (US)
(74) Representative: Leyder, Francis

(56) References cited:
- EP-A- 0 085 389
- EP-A- 0 133 267
- EP-A- 0 223 010
- EP-A- 0 376 084
- EP-A- 0 379 292
- EP-A- 0 455 313
- DE-A- 3 346 798

## Description

### FIELD OF THE INVENTION

This invention relates to the polymerization of unsaturated hydrocarbons over Ziegler-type catalysts, and more particularly, to processes for formulating such catalysts by sequentially mixing the various components thereof and controlling the orders of addition and the durations of mixing such catalyst components.

### BACKGROUND OF THE INVENTION

The polymerization of unsaturated hydrocarbons over Ziegler-type catalysts is well known in the art. Such hydrocarbons normally take the form of short chain alpha olefins such as ethylene, propylene and butylene, including substituted alpha olefins such as substituted vinyl compounds, for example, vinyl chloride or vinyl toluene. However, such unsaturated hydrocarbons can also include di-olefins such as 1-3-butadiene or 1-4-hexadiene or acetylenically unsaturated compounds such as methylacetylene or 2-butyne.

Ziegler-type catalysts incorporate a transition metal, usually titanium, zirconium or hafnium, although other transition metals found in Groups 4, 5 and 6 of the Periodic Table of Elements may be employed, which function to provide sites for the insertion of mononer units into growing polymer chains. One type of such polymerization catalysts are the so-called homogeneous catalyst systems in which the transition metal compound is a metallocene comprising one or more substituted or unsubstituted cyclopentadienyl groups coordinated with the transition metal atom forming the situs for polymer growth. Such metallocene-based catalyst systems are the subject of European Patent Application EP 129,368 and U.S. Patent Nos. 4,794,096 to Ewen and 4,892,851 to Ewen et al., the latter two patents disclosing catalysts useful in the polymerization of propylene to form isotactic or syndiotactic polypropylene.

The more widely used transition metal catalysts are the so-called heterogeneous catalyst systems in which a transition metal halide, usually zirconium, hafnium or titanium, di-, tri-, or tetra-halides, are incorporated with a support structure, principally based upon magnesium or zinc halides, ethoxides or the like. For example, U.S. Patent No. 4,476,289 to Mayr et al. discloses so-called "activated" titanium tetrahalides, more specifically, titanium tetrachloride, supported on anhydrous magnesium or zinc halides, principally magnesium chloride or magnesium bromide. The transition metal component is used in conjunction with a second component, commonly referred to as a co-catalyst, which as described in the Mayr et al. patent, is a hydride or organometallic compound based primarily upon aluminum, although lithium or magnesium based compounds are also disclosed.

European patent application EP 379,292 to Matsuura et al et al discloses a solid catalysts component for a Ziegler-type catalyst comprising titanium, magnesium and a halogen, and eventually an organoaluminum compound. A supported catalyst containing yet. another component is disclosed in U.S. Patent No. 4,636,486 to Mayr et al. Here, the titanium compound, which may be a halide, an oxyhalide or an alcoholate in either the di-, tri-, or tetravalent form, is composited with the magnesium support, together with an electron donor compound. Such electron donors, commonly referred to as internal electron donors because they are incorporated as part of the transition metal catalyst component, can be selected from a broad class of compounds including amines, amides, phosphines, ethers, thioethers, alcohol esters, aldehydes, and ketones. As in the case of the aforementioned Patent No. 4,476,289 to Mayr, the catalyst system here also includes a co-catalyst such as triethylaluminum, commonly referred to as TEAL or TEA.

Yet a third component often employed in Ziegler-type catalyst systems is a so-called external electron donor. The external electron donors function similarly as the internal electron donors and in a complimentary or supplementary manner to regulate monomer insertion into the polymer chain growing on the transition metal active sites. Thus, the electron donors can have an impact upon catalyst activity, polymer molecular weight, and polymer morphology as reflected in stereospecificity and physical parameters such as melting point. For example, in the polymerization of propylene, the addition of electron donors under controlled conditions can result in dramatic increases in activity (the amount of polymer produced per unit of catalyst) and in stereoregularity, e.g., an increase in isotactic polymer with a corresponding decrease in atactic. The most widely used external electron donors are organosilicon compounds such as organosilanes and organosiloxanes, including silyl ethers and esters such as alkyl or arylalkyl alkoxysilanes.

The complimentary nature of the internal and external electron donors is addressed in Soga, K. et al., "Effect of Diesters and Organosilicon Compounds on the Stability and Stereospecificity of Ziegler-Natta Catalysts", Transition Metal Catalyzed Polymerizations: Ziegler-Natta and Metathesis Polymerizations, Quirk, R.P., Ed., Cambridge University Press, New York, 1988, pp. 266-279. As discussed in Soga, the concentrations of the internal and external donors in the catalyst system can be adjusted in order to optimize the activity and the stereospecifity of the catalyst. In the experimental work reported there, the transition metal catalyst component comprising titanium tetrachloride supported on magnesium dichloride with an internal donor, e.g., di-N butylphthalate, was slurried in hexane followed by the addition of an external electron donor, phenyl tri-ethoxysilane, and triethylaluminum (TEA) co-catalyst. Soga et al. report on polymerization rates over periods of several hours and isotactic indices measured over periods of several hours for various internal, external catalyst systems at varying concentrations expressed in terms of silicon titanium mole ratios and TEA/titanium mole ratios.

U.S. Patent No. 4,287,328 to Kikuta et al., is directed to the polymerization of alpha olefins in the presence of multi-component catalyst systems involving a "solid product" combined with an organoaluminum compound including, for example, C₁-C₁₀ trialkylaluminum, triethylaluminum, alkyl alkyoxyaluminums, and alkylaluminum halides, and an electron donor including various organic acids, alcohols, ethers, aldehydes, ketones, amines, alkenol amines, esters, phosphines, phosphites, thioethers, thioalcohols, silanes, and siloxanes. The "solid product" catalyst component is formed by reacting a trivalent metal halide such as aluminum trichloride, aluminum tribromide or ferric trichloride with a divalent metal compound such as magnesium, calcium, or zinc hydroxide or oxide or carbonate with titanium tetrachloride, characterized as an electron acceptor. Numerous orders of additions of the various components are described in Kikuta et al., especially in columns 6 through 9. Conditions of mixing can vary over wide temperature ranges and time intervals, but temperatures are preferably in the range of room temperature to about 100°C. The mixing of the various components can be carried out over periods of several minutes to several hours.

U.S. Patent No. 4,567,155 to Tovrog et al., discloses multi-component catalyst systems useful in the gas phase polymerization of alpha olefins. In Tovrog et al., the catalyst systems comprise two base catalyst components, each containing subcomponents. The first component, identified as component "A" comprises a titanium component supported on a hydrocarbon insoluble magnesium component in combination with an electron compound. The second major component is a co-catalyst component, characterized as component "B" comprising a trialkylaluminum, an aromatic acid ester and an unhindered secondary amine. Tovrog discloses that the catalyst components may be mechanically activated by comminution prior to use in polymerization. Comminuted catalysts may be pre-polymerized with an alpha olefin before use as a polymerization catalyst component. In the pre-polymerization procedure, comminuted catalysts and an organoaluminum compound co-catalyst are contacted with an alpha olefin under polymerization conditions and preferably in the presence of a modifier such as methyl-p-toluate and an inert hydrocarbon such as hexane, with typical time durations for pre-polymerization and other pretreatment procedures involving periods of minutes up to a few hours.

U.S. Patent No. 4,767,735 to Ewen et al. discloses a pre-polymerization process carried out over a period of less than a minute and usually ten seconds or less. In the Ewen et al. procedure, an organic solvent stream such as hexane or heptane is established in a pre-mixing line. To this stream are added sequentially a co-catalyst (TEAL), an external electron donor (diphenyldimethyoxysilane) and a supported catalyst component (titanium tetrachloride supported on magnesium dichloride) to form a catalyst system which is then pre-polymerized by contact with propylene for a few seconds. An alternative mode of addition in the Ewen et al. procedure is to add the electron donor to the carrier stream after the addition of the titanium catalyst component, but still before the addition of the propylene. Ewen et al. disclose that the co-catalyst should be present when the electron donor and the transition metal catalyst component contact one another in order to avoid poisoning of the titanium catalyst. In the experimental work described in Ewen et al., one of two titanium chloride catalysts were used in conjunction with TEAL and DPMS under unspecified catalyst concentrations, but at relative amounts of TEAL and DPMS ranging from 2 mmol of TEAL and 0.4 mmol of DPMS (Al/Si ratio of 5) to 2 mmol of TEAL and 0.03 mmol of DPMS (Al/Si ratio of about 67). High efficiency catalyst systems employing external electron donors which may be characterized generally as sec or tert alkyl or cycloalkyl, alkyl dialkoxy silanes in combination with titanium tetrachloride supported on magnesium based supports derived from dialkoxy magnesium compounds are disclosed in Patent 4,927,797 to Ewen. By way of example, the supported catalyst may be formulated through the reaction of diethoxy magnesium, titanium tetrachloride, and n-butyl phthalate under appropriate conditions as specified in the patent. A suitable external electron donor here is methylcyclohexyl dimethoxysilane which is compared with diphenyldimethoxysilane as disclosed in the aforementioned Ewen et al. patent.

### SUMMARY OF THE INVENTION

In accordance with the present invention there are provided novel processes for the formulation of Ziegler-type catalysts from catalyst components involving various orders of addition and mixing times between the several catalyst components. The catalyst components utilized in carrying out the invention involve a transition metal component, an electron donor component, specifically an organosilicon external electron donar, and a co-catalyst component, specifically, an organoaluminum co-catalyst, which are sequentially mixed together in the course of formulating the Ziegler-type catalyst to be charged to an olefin polymerization reactor.

Preferably, in carrying out the invention, an order of addition is used in which the co-catalyst component is initially contacted with either of the transition metal catalyst or the electron donor component. The initial mixing is carried out for a first contact time within the range of 5-120 seconds and preferably 5-60 seconds. This initial mixture is then contacted with the remainder of the electron donor or transition metal component for a second contact time of less than 110 seconds and usually less than 40 seconds. Preferably, the second contact time is of a duration which is shorter than the initial contact time and near zero, that is, for only a second or so as is necessary to achieve good mixing. Here, the second contact can be less than five seconds. The mixture of the three components is then contacted with an olefin to effect polymerization of the olefin in the presence of the thus formulated Ziegler-type catalyst.

In one embodiment of the invention, the transition metal catalyst component and the co-catalyst component are mixed with one another for an initial contact time within the range of 5-120 seconds. The mixture resulting from this initial contact is then contacted with an electron donor component for a second contact time of no more than 30 seconds. The resulting mixture then is contacted with an olefin to effect polymerization of the olefin in the presence of the thus formulated Ziegler-type catalyst. Preferably, the olefin contacting step involves an initial pre-polymerization reaction to effect pre-polymerization of the catalyst prior to introducing the resulting pre-polymerized catalyst into a polymerization reactor containing an olefin.

In a further aspect of the invention, the orders of additions are as described previously with the contact between the transition metal component and the co-catalyst component extending for a first contact time followed by subsequent contact of the resulting mixture with an electron donor for a second contact time having a duration shorter than the first contact time. In a preferred embodiment, the first contact time is at least 20 seconds and more preferably, 20-40 seconds; the second contact time is no more than 30 seconds.

In another embodiment of the invention, the orders of addition are changed from those described above to provide a procedure in which the electron donor component is initially contacted with the co-catalyst component. Here, the initial contact time is within the range of 5-120 seconds and preferably, 5-40 seconds. At the conclusion of the initial contact time, the resulting mixture is then contacted with the transition metal component for a second contact time preferably ranging up to 30 seconds, although longer second contact times of up to 110 seconds can be used under certain circumstances.

In yet a further embodiment of the invention, the orders of additions of the several components are such that the electron donor component is initially contacted with the transition metal catalyst component for a first contact time ranging up to 40 seconds and preferably 5-20 seconds. At the conclusion of this first contact time, the resulting mixture is then contacted with the co-catalyst component for a second contact time ranging up to 20 seconds and of a duration shorter than the first contact time.

As described previously, at the conclusion of the second contact time for various orders of addition, the resulting three component mixture is then contacted with an olefin to effect polymerization thereof in the presence of the catalyst mixture. For each of the various orders of addition it is preferred that a pre-polymerization step be carried out prior to introducing the catalyst into the main reactor. Preferably, the pre-polymerization is carried out for a relatively short period, usually of a duration of less than a minute and preferably less than 20 seconds.

In a further aspect of the invention, the relative amounts of catalyst components can be varied depending upon the particular order of addition. In most cases, the preferred order of addition will involve initial mixing of the transition metal catalyst component with the organoaluminum co-catalyst component. These components are employed together to formulate a precursor mixture having a ratio of aluminum to transition metal mole (atomic) ratio of at least 200. The resulting precursor mixture is then combined with the organosilicon electron donor component to produce a Ziegler-type catalyst formulation in which the transition metal catalyst component and the electron donor component are present in relative amounts to provide an aluminum/silicon mole ratio of no more than 50. The mixture of the three components is then contacted with an olefin to effect polymerization of the olefin in the presence of the thus formulated Ziegler-type catalyst. Preferably, the olefin contacting step involves an initial pre-polymerization step as described above. In this embodiment of the invention, it is preferred that the mole ratio of aluminum to silicon in the catalyst formulation, be within the range of 20 to 50. The mole ratio of silicon to transition metal is at least 5 and more preferably, within the range of 10-20. As noted previously, relatively short time sequences are preferably employed in formulating the Ziegler-type catalyst.

A further embodiment of the invention involves the formulation of a Ziegler-type catalyst as described above, by initial contact of the organoaluminum co-catalyst component with the organosilicon electron donor component. Here, the two components are used in relative amounts to provide a precursor mixture having an aluminum to silicon mole ratio of at least 10. This precursor formulation is then combined with the transition metal component to provide a formulation in which the aluminum/transition metal mole ratio is at least 200, followed by contact of the thus formulated catalyst mixture with an olefin to effect polymerization thereof in the presence of the catalyst mixture. The resulting three component mixture is then maintained in contact for a period of up to 110 seconds, and preferably no more than 30 seconds prior to contact with the olefin in the subsequent polymerization step. Preferably, the silicon to transition metal mole ratio is at least 10; the aluminum to silicon mole ratios and the aluminum to transition metal mole ratios are within the range of 10-40 and 200-400, respectively.

In yet another embodiment of the invention, the organosilicon electron donor component and the transition metal catalyst component are initially mixed to form a precursor mixture having a mole ratio of silicon to transition metal of at least 5 for a first contact time as described previously. This precursor mixture is then combined with the organoaluminum co-catalyst component to provide a Ziegler-type formulation having an aluminum/silicon ratio of no more than 40. The total of the first and second contact times preferably is no more than 60 seconds. It is also preferred that the silicon to transition metal mole ratio be within the range of 5-20.

A still further aspect of the invention involves a procedure for formulating multi-component catalyst systems of the type described above which are to be charged to a reactor. In carrying out the invention, there is provided a plurality of at least four chambers including first and second chambers which contain first and second catalyst components. A third chamber is connected to the second chamber and a fourth chamber, which contains a third catalyst component, is connected to the third chamber. Preferably, the four chambers are connected in a series relationship, although in certain applications involving particular sequences of additions such as in certain formulation protocols for Ziegler-type catalyst systems, the first and second chambers may be connected in parallel to one another, each being in series with the third chamber. In either configuration, the contents of the first and second chambers are discharged into the third chamber and the first and second catalyst components are maintained in mixture with one another for a desired first contact time. Thereafter, the contents of the third chamber are discharged into the fourth chamber where they are mixed with the third catalyst component for a desired second contact time. The contents of the fourth chamber, comprising the multicomponent catalyst system, are then discharged into a reactor where they are contacted with at least one reactant to effect catalysis of the desired chemical reaction within the reactor.

In accordance with the invention, this procedure may be employed in the formulation of Ziegler-type catalysts following protocols as described previously involving various orders of addition and mixing times between the several catalyst components in sequentially mixing together a transition metal component, an electron donor component, and a co-catalyst component. In the order of addition in which an organoaluminum co-catalyst component is initially contacted with either of the transition metal catalyst or the electron donor component, these components are initially present in the first and second chambers and discharged from there into the third chamber. The initial mixing is carried out for a first contact time, which preferably is two minutes or less and more specifically within the time constraints described above. This initial mixture is then discharged from the third chamber into the fourth chamber with the other of the electron donor or transition metal component for a second contact time of no more than one minute and preferably of a duration shorter than the first contact time. The resulting three component system is then discharged from the fourth chamber into the polymerization reactor and contacted with the unsaturated monomer to effect the polymerization reaction.

In following the preferred protocol, the co-catalyst and transition metal catalyst component are initially disposed in first and second series-connected chambers and the electron donor component is in the fourth chamber. The co-catalyst component is discharged from the first chamber into the second under sufficient pressure to displace it and the transition metal component into the third chamber where they are maintained for the desired first contact time. Thereafter, this mixture is displaced into the fourth chamber where it is maintained for the desired second contact time. Preferably, at the conclusion of the second contact time, the resultant three component catalyst system is contacted with an olefinic compound to cause pre-polymerization of the catalyst system prior to supplying the pre-polymerized catalyst to the polymerization reactor. Pre-polymerization is carried out for a relatively short period of time, usually less than one minute, preferably less than about 20 seconds and more desirably, about 10 seconds or less. Preferably, the polymerization of the catalyst system is carried out by discharging the catalyst system from the fourth chamber into an elongated tubular reactor containing the olefinic compound. The olefinic compound and the catalyst system are passed through the tubular reactor at a flow rate sufficient to provide the desired residence time in the reactor, and thereafter discharged from the reactor into the polymerization reactor. Residence times of only a few seconds, about 2 seconds or less, are advantageously employed.

### BRIEF DESCRIPTION OF THE DRAWINGS

FIGURES 1 and 2 are graphical presentations of yield for various orders of addition as a function of the first and second precontact times, respectively.

FIGURES 3 and 4 are graphs illustrating the xylene soluble content of the polymer products for various orders of addition as a function of the first and second precontact times, respectively.

FIGURES 5 and 6 are graphical representations of the bulk density of the polymer product for the various orders of addition as a function of the first and second precontact times, respectively.

FIGURES 7 and 8 are graphs of yield as a function of aluminum/titanium mole ratio for various orders of addition.

FIGURE 9 is a graph of yield versus aluminum/silicon mole ratio for the orders of addition shown in FIGURE 7.

FIGURES 10, 11 and 12 are graphs illustrating the xylene soluble content of the polymer product for the various orders of addition as a function, respectively, of aluminum/titanium and aluminum/silicon and silicon/titanium ratios.

FIGURES 13 and 14 are graphical representations of the bulk density of the polymer product for the various orders of addition as a function of aluminum/titanium and aluminum/silicon ratios, respectively.

FIGURE 15 is a schematic illustration showing four component chambers connected in series and leading to a polymerization reactor in accordance with the present invention.

FIGURE 16 is a schematic illustration of a modified form of the invention involving parallel-series connected chambers.

FIGURE 17 is a schematic illustration of the present invention as used in supplying a pre-polymerized catalyst system to a continuous flow reactor as used for the polymerization of propylene.

### DETAILED DESCRIPTION OF THE INVENTION

In the polymerization of unsaturated hydrocarbons over Ziegler-type catalysts, a desideratum common to all such processes, is a high yield of polymer, commonly expressed in terms of catalyst activity. Catalyst activity is normally in terms of grams of polymer per gram of transition metal per hour.

A second important characteristic in polymer production is the bulk density of the polymer. The bulk density, commonly expressed in terms of grams per cubic centimeter, should be relatively high. If the bulk density is too low, the polymer will tend to be "fluffy" and will tend to cause plugging and handling problems in the product transfer system. This is particularly important in a continuous or a semi-continuous polymerization where plugging of the withdrawal outlet or another point in the polymerization system can cause serious interruptions in production schedules.

Yet a third important polymer characteristic which is particularly significant in the case of alpha olefins containing three or more carbon atoms is the crystallinity of the polymer product. By way of example, in the polymerization of propylene, the resulting polymer product can be isotactic, syndiotactic or atactic. Syndiotactic and isotactic polymers are crystalline and are insoluble in hydrocarbons solvents such as xylene. Atactic polymers, on the other hand, are amorphous, waxy-type materials which exhibit high solubility in xylene.

As described, for example, in U.S. Patent No. 4,892,851 to Ewen et al., isotactic and syndiotactic polymers are regular repeatable structures which can be characterized in terms of the Fischer projection formula as described below. In the isotactic structure, all of the methyl groups attached to the tertiary carbon atom of the successive monomer units lie on the same side of a hypothetical plane extending through the main chain of the polymer as indicated schematically by the following two-dimensional representation.

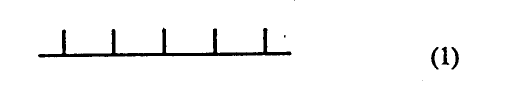

For syndiotactic structures, the methyl groups attached to the tertiary carbon atoms on successive monomer units lie on alternative sides of the hypothetical plain is as follows:

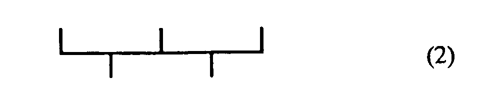

For structure (1) above, the isotactic arrangement may be described employing Bovey's NMR nomenclature as --- mmmm --- in which each m represents a "meso" dyad of two successive methyl groups on the same side of the plane. Using this same nomenclature, the syndiotactic structure (2) above, may be described as --- rrrr ---, with each r indicating a "racemic" dyad of two successive methyl groups on opposite sides of the hypothetical plane. Of course, similar characterizations may be made for other polymers such as polystyrene or polyvinyl chloride. The non-crystalline atactic polymers involve randomly irregular structures. For a further description of other characterizations of atactic, isotactic and syndiotactic polymers, reference may be had to the aforementioned Patents Nos. 4,794,096 and 4,892,851, the entire disclosures of which is incorporated herein by reference.

From the foregoing description, it will be recognized that the crystallinity of a polymer such as polypropylene can be characterized in terms of the percentage of the polymer which is soluble in xylene. For highly crystalline isotactic or syndiotactic polypropylene, with few atactic imperfections, the percent of the polymer soluble in xylene will be quite low, typically on the order of 4 % or less and sometimes, below 3 %. As the polymer chain becomes more atactic, xylene solubles can range to figures well in excess of 5%, which indicates polymers, while still retaining good structural integrity, having a high degree of atactic imperfections.

The present invention may be carried out employing individual catalyst components which are, in themselves, well known to those skilled in the art. As described previously, there are a wide variety of transition metal catalysts known to be useful in olefin polymerization and such transition metal catalysts may be employed in the present invention. As a practical matter, it usually will be desirable to use a supported catalyst component and while a supported catalyst component which does not require an internal electron donor, as described, for example, in the aforementioned 4,476,289 to Mayr et al., may be used, it normally is preferred to employ a supported transition metal catalyst incorporating an internal electron donor as described in the aforementioned Mayr et al. Patent 4,636,486. The Ziegler transition metal catalysts include, as is well known in the art, units of transition metals found in Groups 4, 5 and 6 (New Notation) of the Periodic Table of Elements. In addition to the titanium, zirconium and hafnium transition metal components commonly employed in olefin polymerizations, other such transition metals proposed for use in commercial Ziegler-type catalysis include vanadium, niobium, and chromium.

Like the transition metal component, the co-catalyst components employed in the present invention also be selected-from materials which are old and well known in the art. They can include metal alkyls, metal alkyl halides and substituted alkyls which can include Group 1 metals such as lithium, sodium and potassium, Group 2 metals such as beryllium, and magnesium, Group 12 metals such as zinc and cadmium and Group 13 metals such as aluminum and gallium. The most widely used co-catalyst are organoaluminum compounds which can include trialkylaluminum, dialkyl aluminum hydrides and halides, and alkyl aluminum compounds such as alkyl aluminum dihalides. Aluminum mono-, di-, or tri-alkoxides or phenoxides and the like may be employed in the present invention. Suitable organoaluminum compounds useful as co-catalysts in Ziegler-Natta catalyst formulations are disclosed in the aforementioned patent to Tovrog et al., as well as in U.S. Patent No. 3,642,746 to Kashiwa et al, and U.S. Patent No. 4,316,966 to Mineshima. As a practical matter, the co-catalyst will usually take the form of an aluminum alkyl or aluminum alkyl halide, which, in some cases, may be complexed with another metal alkyl such as a lithium alkyl. Probably the most widely used co-catalysts are trimethylaluminum (TMA) and triethylaluminum (TEAL) with the latter normally being preferred as a co-catalyst in the polymerization of C₃+ alpha olefins such as in the production of polypropylene, propylene co-polymers, polyvinylchloride, and the like.

For a general discussion of transition metal and co-catalyst components in Ziegler catalysis, reference is made to Boor, John "Ziegler-Natta Catalysts in Polymerizations", Academic Press, Inc., New York (1979) and particularly, Chapter 4 entitled "Chemical Description of Ziegler-Natta Catalysts for Olefins".

Numerous electron donors may be employed in carrying out the present invention. The electron donors used are Lewis bases which function in the nature of external electron donors as described previously. A wide variety of such Lewis bases are well known in the art. Preferably, the electron donor used here will take the form of organic silicon-containing compounds such as organic siloxanes or silanes, including silyl ethers and esters such as alkyl or arylalkyl alkoxysilanes. Particularly suitable examples include methyl cyclohexyl dimethoxysilane, isobutyl trimethoxysilane and diphenyl dimethoxysilane. Other suitable catalyst components which can be used in carrying out the invention are disclosed in the aforementioned Patents Nos. 4,287,328 to Kikuta et al., 4,567,155 to Tovrog et al., 4,316,966 to Mineshima et al., and 4,927,797 to Ewen, the entire disclosures of which are incorporated herein by reference.

Specific applications of the present invention involve the formulation of Ziegler-type catalysts by mixing the various components thereof under certain specific orders of additions and contact times between components when going from one contacting step to another. After the several components are mixed together, the resulting multi-component catalyst is then contacted with the unsaturated monomer, preferably an alpha olefin, to effect polymerization of the monomer in the presence of the Ziegler-type catalyst. Preferably, the initial olefin contacting step subsequent to formulation of the composite catalyst is a pre-polymerization step with the resulting pre-polymerized catalyst then being supplied to a polymerization reactor to produce the desired polymer product.

The polymerization process may be carried out as either a batch-type, continuous, or semi-continuous process, but preferably, polymerization of the olefin monomer (or monomers) will be carried out in a loop-type reactor of the type disclosed in the aforementioned Patent No. 4,767,735 to Ewen et al. As described in the Ewen et al. patent, when the catalyst components are formulated together, they are supplied to a linear tubular pre-polymerization reactor where they are contacted for a relatively short time with the pre-polymerization monomer prior to being introduced into the main loop-type reactor. By way of example, the residence time of the catalyst and monomer within the pre-polymerization reactor will be normally less than a minute, and usually within the range of a few seconds to perhaps 20 seconds. In the experimental work described hereinafter, the catalyst components, after being combined to form the Ziegler-type catalysts, were pre-polymerized for a period of five seconds. Durations of this nature will be suitable in many commercial applications.

In practice, the most significant application of the present invention will be in the polymerization of C₂+ alpha olefins, particularly C₂-C₄ and most particularly those polymerizations involving propylene, either alone or with another olefin, for example ethylene, to produce polypropylene or co-polymers such as ethylene/propylene co-polymer. The preferred transition metal components will be in the form of the titanium, zirconium or hafnium halides with supported tetravalent components such as titanium tetrachloride, being used in most commercial applications. Supports will normally take the form of a magnesium or zinc dihalide, dialkyl or dialkoxide such as magnesium dichloride or magnesium diethoxide, which may include magnesium alkoxide halides such as magnesium diethoxychloride. The co-catalyst in such applications will normally take the form of a trialkyl aluminum such as TEAL or TMA as described previously, and the electron donor, a siloxane or silane, and more specifically, cyclohexylmethyldimethoxysilane as described previously.

The orders of addition and the contact times for the various orders of addition can be tailored to arrive at the desired characteristics of the final polymer product. The results of the various orders of addition and modes of operations will be apparent from the results of the experimental work described below. In general, it has been found that the order of addition in which the transition metal catalyst component and the co-catalyst component are mixed together first for a first contact time within the range of about 5 to 120 seconds, followed by contact with the electron donor for a second contact time which probably is relatively short, about 30 seconds or less, and also of a duration which is shorter than the first contact time, produces the best overall results in terms of polymer yield, polymer bulk density, and crystallinity as measured by a low xylene content.

Considering all three of the above-described parameters, the second most favorable order of addition of the catalyst components involves initially mixing the electron donor and the co-catalyst followed by contacting the resulting mixture with the transition metal catalyst component. Here, the bulk density is somewhat lower and the xylene solubles of the polymer product somewhat higher than in the case of the first order of addition. However, the polymer yield for this secondary order of addition can be forced somewhat higher than for the first order of addition and thus, this embodiment of the invention can be employed where the yield is of paramount concern. Here, the contact times are generally 5-120 seconds for the first mixture and up to 110 for the second prior to contact with the olefin.

The tertiary order of addition involving first mixing the catalyst and electron donor and then contacting this mixture with the co-catalyst yields results which, in general, are not as good as those achieved by the first two orders of additions. However, where xylene solubles are of paramount concern, an extremely low xylene soluble content can be achieved by using very short contact times in conjunction with this tertiary order of addition.

The significance of and advantages achieved by the various orders of additions and contact times employed in accordance with the present invention are further indicated by the experimental work described below. In this experimental work, the transition metal catalyst component was a supported titanium tetrachloride catalyst formulated on a magnesium-based support and incorporating N-dibutylphthalate as an internal electron donor. The catalyst had a titanium content of about 2 wt.%. Catalysts of this general nature are known in the art as evidenced, for example, by the aforementioned Patent No. 4,927,797.

The co-catalyst used in the experimental work was triethylaluminum (TEAL), which as noted previously, is a conventional co-catalyst used in the polymerization of propylene. The co-catalyst as used in the experimental work was a 0.2 molar solution of TEAL in hexane which had been freshly distilled and dried. The external electron donor used in the experimental work was cyclohexylmethyldimethoxysilane (CMDS) which was obtained from a commercial service and dried by absorption over a molecular sieve.

In an initial suit of the experimental work, the catalyst components were used in relative amounts of 10 mg of transition metal catalyst, 1 mmol of TEAL and 0.025 mmol of CMDS to provide an aluminum/titanium atomic ratio of 200 (Al/Ti=200) and an aluminum/silicon atomic ratio of 40 (Al/Si=40). As described latter the aluminum/titanium and aluminum/silicon ratios can be varied to impact catalyst yield and polymer properties such as molecular weight distribution and xylene solubles as well as catalyst yields. However, in the initial suit of experimental work the Al/Ti and Al/Si ratios were maintained constant thus providing good comparative indications of the effect of orders of additions and contact times on catalyst yield and also the polymer characteristics of bulk density and xylene soluble content, which as discussed previously, provides a measure of polymer crystallinity.

Each polymerization run was carried out for a period of one hour at 70°C. Preliminary to conducting the polymerization run, approximately 16 mmol of hydrogen under a pressure of 8.27.10⁵ Pa (120 psig) was discharged to an empty 2 l Zipperclave reactor which was dried and kept under an internal pressure of 0.69.10⁴ - 1.38.10⁴ Pa (1-2 psig). Immediately after charging the reactor with hydrogen, 1 l of propylene was charged to the reactor which was then heated to 70°C and stirred at 1,000 rpm to effect liquid phase polymerization of the propylene.

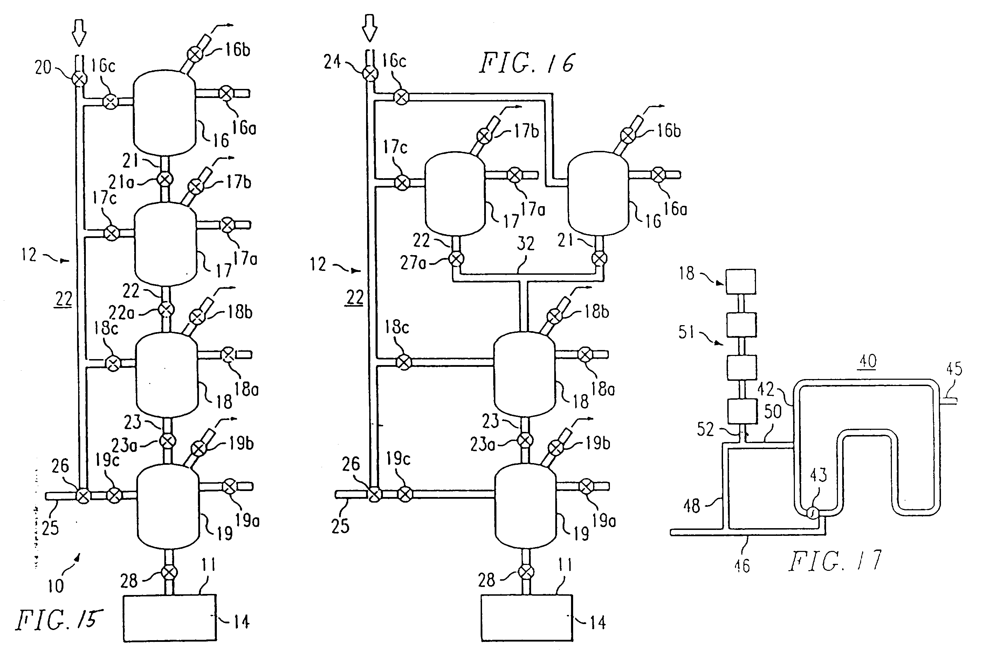

The catalyst components were contacted under the various orders of additions and contact times as described below using an arrangement of 4 series connected stainless steel bombs, each having a volume of 40 ml and connected to one another in series through 0.635 cm (1/4 inch) stainless steel ball valves. The several bombs used in this experimental study were connected in a manner as shown in Fig. 15 as described below.

In the particular configuration used in the experimental work reported herein, four bombs were connected in series, with the first two bombs containing the catalyst components mixed together during the initial contacting step, the second bomb being empty, and the fourth bomb containing the catalyst component contacted in the second contact step with the initially formed mixture. The series connected bombs were arranged vertically so that flow from one chamber to the next was aided by gravity. The transition metal catalyst component was mixed with hexane in a hexane/catalyst suspension volume ratio of 5:1. In addition, hexane was also added to the chamber containing the electron donor solution in a hexane/electron donor solution volume ratio 4:1 in order to further ensure good mixing of the catalyst components. This protocol with gravity mixing (without agitation of the pre-mixing assembly), was employed in all of the test procedures in order to provide for consistency from one test to another.

Three order of addition protocols were used in carrying out the experimental work. The first, Protocol A, involved initial mixing of the catalyst and co-catalyst components with the co-catalyst discharged from the uppermost first chamber into the second chamber containing the transition metal catalyst component. The third chamber was, of course, empty as described previously, with the fourth lowermost chamber containing the electron donor.

The second protocol, designated herein as Protocol B, involved initial mixing of the co-catalyst in the first chamber, followed by the electron donor in the second chamber with the transition metal component incorporated into the fourth chamber. The final order of addition, Protocol C, involved displacement of the electron donor from the uppermost first chamber into the second chamber containing the transition metal catalyst and then into the third empty chamber, followed subsequently by displacement of the mixture into the fourth chamber containing the co-catalyst.

Immediately after contact of the first resulting sub-mixture with the third component for the desired pre-contact time, the three component system was contacted with propylene to effect a five second room temperature pre-polymerization of the catalyst. The resulting pre-polymerized catalyst was then discharged into the Zipperclave reactor serving as the polymerization reactor. The pre-polymerization step was carried out by charging the four chamber pre-contact assembly with liquid propylene and after the five second pre-polymerization time, discharging the contents of the pre-contact assembly by pumping 600 ml of propylene through the assembly and into the polymerization reactor. The total propylene used in the polymerization step was 1.45 l. Some of the propylene was retained in the pre-contact assembly.

The results of the pre-mixing under Protocols A, B and C for various initial and secondary contact times are shown in Tables I, II and III, respectively. For each of the tests, the Al/Ti and Al/Si ratios were 200 and 40, respectively, and polymerization was carried out for one hour at 70°C. In Tables I-III, the initial and secondary contact times T₁ and T₂ are shown in seconds in the first and second columns. The amount of polymer produced in grams is shown in the third column, and the bulk density in grams per cubic centimeter is shown in the fourth column. The melt flow index in grams per 10 minutes for the polymer product is shown in the fifth column and the weight percent of the polymer soluble in xylene is shown in the last column.

**TABLE I.**

| (Protocol A) | | | | | |
|---|---|---|---|---|---|
| T₁ | T₂ (sec) | Yield (gms) | b.d. | MFI | %XS |
| 5 | 30 | 174 | 0.47 | 2.06 | 3.32 |
| 10 | 30 | 184 | 0.46 | 2.08 | 3.20 |
| 40 | 30 | 238 | 0.47 | 2.10 | 3.51 |
| 120 | 30 | 242 | 0.46 | 1.91 | 3.11 |
| | | | | | |
| 40 | 0 | 276 | 0.48 | 2.00 | 3.19 |
| 70 | 0 | 256 | 0.49 | 2.19 | 3.16 |
| | | | | | |
| 20 | 50 | 278 | 0.42 | 2.59 | 3.12 |
| 20 | 80 | 270 | 0.46 | 2.14 | 2.32 |
| 40 | 60 | 216 | 0.45 | 2.28 | 3.44 |
| 40 | 110 | 214 | 0.42 | 2.16 | 3.24 |

**TABLE II.**

| (Protocol B) | | | | | |
|---|---|---|---|---|---|
| T₁ | T₂ (sec) | Yield (gms) | b.d. | MFI | %XS |
| 5 | 30 | 217 | 0.46 | 2.48 | 3.55 |
| 40 | 30 | 240 | 0.44 | 2.68 | 3.87 |
| 70 | 30 | 250 | 0.42 | 2.51 | 4.07 |
| 120 | 30 | 261 | 0.39 | 4.72 | 5.88 |
| | | | | | |
| 40 | 0 | 242 | 0.46 | 2.57 | 3.83 |
| 70 | 0 | 296 | 0.40 | 2.73 | 3.16 |
| | | | | | |
| 20 | 50 | 221 | 0.43 | 2.38 | 3.35 |
| 20 | 80 | 258 | 0.41 | 3.28 | 4.31 |
| 40 | 60 | 224 | 0.44 | 2.49 | 3.04 |
| 40 | 110 | 237 | 0.34 | 4.44 | 6.39 |

**TABLE III.**

| (Protocol C) | | | | | |
|---|---|---|---|---|---|
| T₁ | T₂ (sec) | Yield (gms) | b.d. | MFI | %XS |
| 5 | 30 | 182 | 0.44 | 3.58 | 4.32 |
| 20 | 30 | 172 | 0.42 | 3.14 | 4.72 |
| 40 | 30 | 151 | 0.42 | 3.22 | 4.47 |
| 120 | 30 | 118 | 0.43 | 2.53 | 3.99 |
| | | | | | |
| 40 | 0 | 196 | 0.45 | 1.93 | 2.24 |
| 70 | 0 | 176 | 0.45 | 1.93 | 2.40 |

Table IV illustrates additional results carried out for Protocol C, but using polypropylene from a different source than the polypropylene used in the experimental work reported in Tables I, II, and III. Experimental results vary from one propylene source to another. Accordingly, it is considered prudent to not rely upon a direct cross correlation in comparing the experimental results attained with the second propylene source with those obtained with the first propylene source. However, the work reported in Table IV can be considered with the work reported to Table III to show the results of varying the secondary contact time for Protocol C.

**TABLE IV.**

| (Protocol C) | | | | | |
|---|---|---|---|---|---|
| T₁ | T₂ | Yield (gms) | b.d. | %XS | MFI |
| 20 | 30 | 244 | 0.43 | 3.28 | 2.70 |
| 40 | 30 | 152 | 0.40 | 3.96 | 3.12 |
| 20 | 50 | 167 | 0.40 | 7.11 | 5.26 |
| 20 | 80 | 129 | 0.37 | 6.18 | 4.74 |
| 40 | 60 | 108 | 0.32 | 8.79 | 6.45 |
| 40 | 110 | 135 | 0.38 | 7.95 | 5.46 |

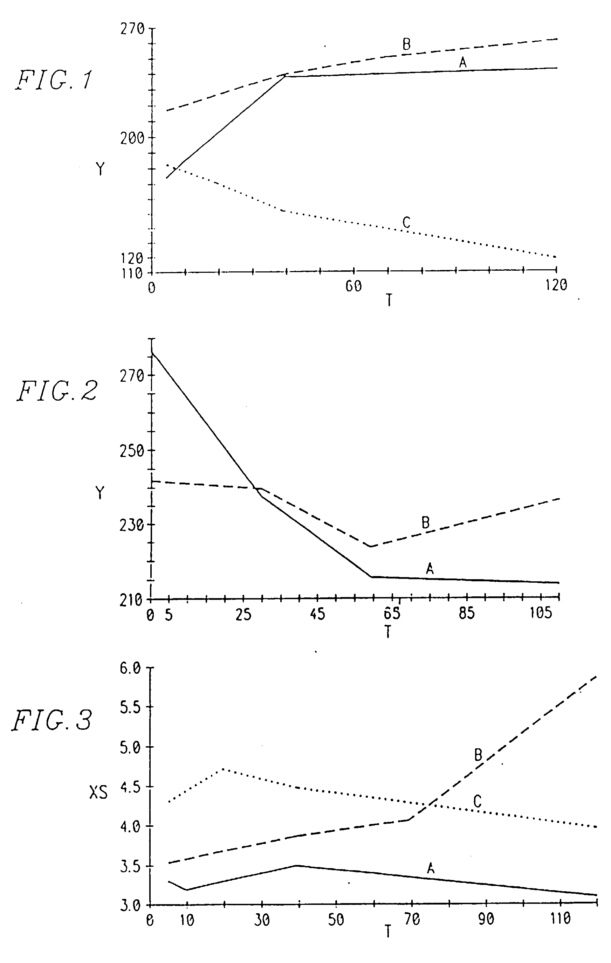

Turning now to the drawings, FIGURES 1 through 6 present graphical representations of the results of the experimental work in terms of the durations of the first precontact time with the second precontact time held constant at 30 seconds and as a function of the second precontact time with the first precontact time held constant at 40 seconds. In each of FIGURES 1 through 6, the graphs are labelled by the legends A, B, and C to correspond to the order of addition Protocols A, B, and C, as described above. Thus, in FIGURE 1, for example, curve A is a plot of polymer yield, Y, in grams on the ordinate as a function of the duration of the first precontact time, T, in seconds on the abscissa for the order of addition of the transition metal catalyst mixed initially with the co-catalyst, followed by contact of this mixture with the electron donor. Curve B is a graphical presentation of this same data for the order of addition in which the electron donor and co-catalyst are mixed first followed by addition of the transition metal catalyst and curve C shows the yield for the order of addition in which the transition metal catalyst component and the electron donor are initially mixed together, with this sub-mixture then contacted with the co-catalyst.

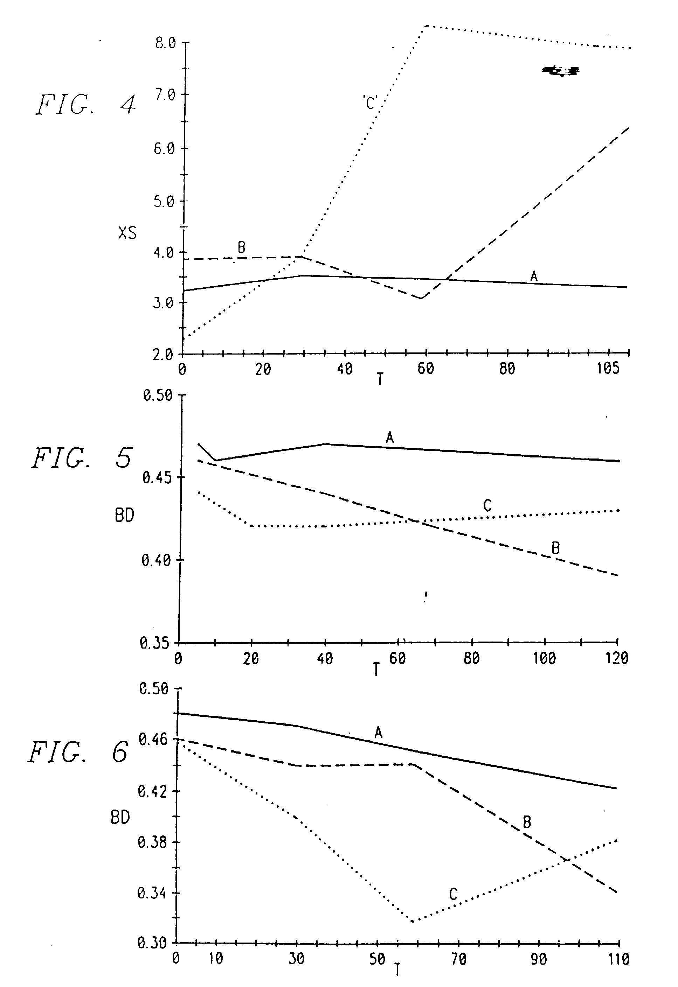

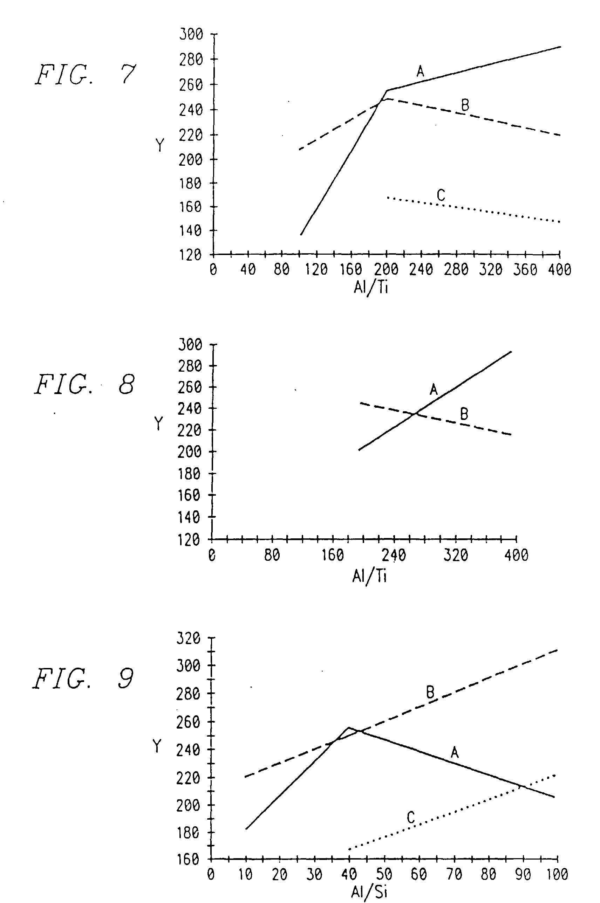

In FIGURES 1 and 2 the yield in grams, Y, is plotted on the ordinate versus the time, T, in seconds on the abscissa. In FIGURES 3 and 4, the xylene soluble content, XS, in weight percent is plotted on the ordinate versus the time, T, in seconds on the abscissa, and in FIGURES 5 and 6 the bulk density, .B.D., in g/cm³ is plotted on the ordinate versus the time in seconds on the abscissa. In FIGURES 1, 3 and 5, the time on the abscissa is the first precontact time with the second precontact time held constant at 30 seconds. In FIGURES 2, 4, and 6, the time is the duration of the second contact time with the first precontact time held constant at 40 seconds.

As illustrated in FIGURE 1, the polymer yields for Protocols A and B generally increased as the first precontact time increased. The reverse was true for Protocol C. For very short first precontact times Protocol B offered a substantially better yield than Protocol A. However, as the precontact time lengthened to about 30 seconds and beyond, the yields were roughly comparable.

As shown in FIGURE 2, Protocol A suffered a dramatic loss in activity with an increase in the second precontact time. In general, for second contact times of about 30 seconds or less, the yield is very high for Protocol A and generally as good as or better than the yield for Protocol B, which remains fairly level across the range of second contact times. The yield for Protocol C is not illustrated in FIGURE 2, but would be well below that for Protocols A and B based upon the experimental work reported in Tables III and IV using the different propylene sources as described above.

As shown in FIGURES 3 and 4, Protocol A in which the transition metal catalyst and co-catalyst are mixed initially, show consistently low xylene solubles across the ranges measured for both the first and second precontact times. In every case the xylene content was about 3.5% % or less. For Protocol B, in which the electron donor and co-catalyst were initially mixed, the xylene solubles stayed generally low so long as the contact times during the first and second mixing steps were not allowed to become too great. An exception, however, was noted for a second precontact time of 60 seconds, where, as shown in FIGURE 4, the xylene solubles content reached a minimum of about 3%. As is shown by a consideration of FIGURES 3 and 4 together, for the Protocol in which the electron donor and co-catalyst are mixed together initially, too long of durations for both the first and second contact times result in increasing xylene solubles content. In general, the third order of addition in which the transition metal catalyst component and electron donor are contacted first, results in relatively high xylene solubles contents which are moderately high for relatively short initial contact times and extremely high for the longer second contact times as shown in FIGURE 4.

As shown in FIGURES 5 and 6, the bulk density remained high for Protocol A, regardless of the duration of the first contact time. The highest bulk densities were obtained for Protocol A across the range of second contact times, although the bulk density did decrease moderately as the second contact time increased in length. Over the entire span of contact times, Protocol B produced slightly lower to substantially lower bulk densities than those achieved by Protocol A, although they were generally better than the bulk densities resulting from Protocol C. For both Protocols A and B, the bulk density progressively decreases with an increase in the second precontact time.

The melt flow data reported in Tables I-IV did not appear to indicate any clear correlation of the melt flow index with the various orders of addition between the three catalyst components and this parameter is not illustrated graphically. In general, an increase in xylene solubles was found to generally correspond to an increase in melt flow index.

From the foregoing experimental work carried out at constant ratios of aluminum, titanium and silicon, some general observations can be made regarding the advantages and disadvantages of the various orders of addition. As a general rule, Protocol A, the order of addition in which the transition metal component and the co-catalyst are mixed together first followed by addition of the electron donor, is preferred since this produces the best overall results when yield, bulk density, and xylene solubles content are considered together. As noted previously, the preferred first contact time here is from about 20 to 40 seconds. However, longer contact times can be readily used in this protocol since the most important parameter here appears to be the second contact time. The second contact time desirably is relatively short, preferably no more than 30 seconds, and usually the second contact time can range down to near zero. That is, the second contact time need only be so long as is necessary to ensure good mixing of the components before the pre-polymerization step. Where yield is of paramount concern, Protocol B, the order of addition involving the mixing together initially of the electron donor and co-catalyst, may be employed. Here, the first contact time ranges from about 5 to 120 seconds, but preferably is within the range of 5-40 seconds. The second contact time, as noted previously, preferably is shorter than the first, ranging from near zero to 30 seconds. Here, the very short contact times for both mixing steps can be employed consistent with obtaining good homogeneous mixtures of the catalyst components.

The order of addition in which the transition metal component and the electron donor are mixed together first will usually not be employed since the results in terms of yield and bulk density, and usually in terms of xylene solubles, is not as good as those achieved employing the other orders of addition. An exception to this, however, is in the circumstances in which a low xylene soluble content of the polymer is of paramount importance. Here, by maintaining the second contact time at a duration which is short in relation to the first contact time and also short in absolute value, extremely low xylene solubles can be attained. In addition, the bulk density can be kept to a reasonably high level. Preferably, the first contact time in this embodiment of the invention is kept to durations within the range of 5-20 seconds. The second contact time should be of a duration shorter than the first. It is particularly preferred in order to achieve the advantage of an extremely low xylene content while sacrificing little or no loss in bulk density to keep the second precontact time to zero; that is, to carry out the invention so that the co-catalyst is added to the catalyst donor mixture in the presence of the propylene or other alpha olefin during the pre-polymerization step.

In a further embodiment of the invention, the results in terms of yield, bulk density and xylene solubles can be further tailored for the various initial and secondary contact times for the different orders of addition by changing the relative amounts of catalyst, co-catalyst and organosilicon electron donor as reflected by different ratios of aluminum, transition metal, and silicon.

A second suite of experimental work relative to this embodiment of the invention was carried out employing the various orders of addition identified previously as Protocols A, B and C, with the supported titanium tetrachloride transition metal catalyst, organoaluminum co-catalyst, and organosilicon electron donor, identified previously. Here, experimental runs were carried out at initial contact times varying from 20 to 40 seconds, followed by secondary contact times varying from 30 to 110 seconds with the ratios of aluminum, silicon and titanium also being varied. The experimental work conducted here was carried out using the various components in the same solutions and under the same experimental conditions as described previously. The experimental apparatus utilized here involved the four series-connected stainless steel bombs as referred to previously and the pre-polymerization time was, as in the first suite of experimental work, five seconds.

The additional experimental work involving not only changes between Protocols A, B and C with different initial and secondary contact times, but also different ratios of aluminum, silicon and titanium, were carried out using the propylene source used in the experimental work reported in Table IV above. The polymerization runs were conducted at 70°C for one hour. The results of this experimental work are shown in Tables V, VI and VII for Protocols A, B and C, respectively. Tables V through VII present the results of the experimental work in a format similar to that used for Tables I through IV, except that in addition, the different ratios involved in terms of Al/Ti, Al/Si, and Si/Ti are also shown, these ratios being varied as shown in the Tables. Thus, the aluminum/titanium ratio varied from 100 to 400, the aluminum/silicon ratio from 10 to 100 and the silicon/titanium ratio varying from 2 to 20. It will be recognized that the ratios are interdependent; thus, when the aluminum/silicon ratio is maintained constant, a change in the aluminum/titanium ratio will likewise result in a change in the silicon/titanium ratio.

**TABLE V.**

| (PROTOCOL A) | | | | | | | | |
|---|---|---|---|---|---|---|---|---|
| T1 | T2 | Al/Ti | Al/Si | Si/Ti | Yield(gms) | b.d. | %XS | MFI |
| 20 | 50 | 100 | 40 | 2.5 | 135 | 0.40 | 9.75 | 7.16 |
| 20 | 50 | 200 | 10 | 20 | 182 | 0.46 | 2.08 | 1.79 |
| 20 | 50 | 200 | 40 | 5 | 256 | 0.45 | 5.12 | 3.54 |
| 20 | 50 | 200 | 100 | 2 | 206 | 0.37 | 12.44 | 11.42 |
| 20 | 50 | 400 | 40 | 10 | 291 | 0.42 | 4.72 | 3.56 |
| | | | | | | | | |
| 20 | 80 | 200 | 40 | 5 | 199 | 0.43 | 5.35 | 3.54 |
| 20 | 80 | 400 | 40 | 10 | 295 | 0.44 | 2.67 | 2.64 |
| | | | | | | | | |
| 40 | 60 | 200 | 40 | 5 | 233 | 0.45 | 5.49 | 3.72 |
| 40 | 60 | 400 | 40 | 10 | 145 | 0.45 | 3.55 | 3.02 |
| | | | | | | | | |
| 40 | 110 | 200 | 40 | 5 | 253 | 0.46 | 3.80 | 2.81 |
| 40 | 110 | 400 | 40 | 10 | 161 | 0.40 | 3.63 | 3.10 |

**Table VI.**

| (PROTOCOL B) | | | | | | | | |
|---|---|---|---|---|---|---|---|---|
| T1 | T2 | Al/Ti | Al/Si | /Ti | Yield(gms) | b.d. | %XS | MFI |
| 20 | 50 | 100 | 40 | 2.5 | 206 | 0.36 | 7.91 | 5.58 |
| 20 | 50 | 200 | 10 | 20 | 220 | 0.46 | 2.20 | 1.70 |
| 20 | 50 | 200 | 40 | 5 | 250 | 0.38 | 7.48 | 4.06 |
| 20 | 50 | 200 | 100 | 2 | 313 | 0.30 | 12.87 | 11.91 |
| 20 | 50 | 400 | 40 | 10 | 217 | 0.40 | 3.95 | 3.01 |
| | | | | | | | | |
| 20 | 80 | 200 | 40 | 5 | 245 | 0.35 | 7.35 | 4.17 |
| 20 | 80 | 400 | 40 | 10 | 217 | 0.43 | 4.00 | 2.98 |
| | | | | | | | | |
| 40 | 60 | 200 | 40 | 5 | 275 | 0.39 | 5.12 | 3.33 |
| 40 | 60 | 400 | 40 | 10 | 185 | 0.42 | 3.67 | 2.45 |
| | | | | | | | | |
| 40 | 110 | 200 | 40 | 5 | 291 | 0.41 | 4.55 | 3.28 |
| 40 | 110 | 400 | 40 | 10 | 215 | 0.44 | 3.20 | 2.46 |

**Table VII**

| (PROTOCOL C) | | | | | | | | |
|---|---|---|---|---|---|---|---|---|
| T1 | T2 | Al/Ti | Al/Si | /Ti | Yield(gms) | b.d. | %XS | MFI |
| 20 | 30 | 200 | 40 | 5 | 244 | 0.43 | 3.28 | 2.70 |
| | | | | | | | | |
| 40 | 30 | 200 | 40 | 5 | 152 | 0.40 | 3.96 | 3.12 |
| | | | | | | | | |
| 20 | 50 | 200 | 40 | 5 | 167 | 0.40 | 7.11 | 5.26 |
| 20 | 50 | 200 | 100 | 2 | 222 | 0.40 | 9.74 | 7.47 |
| 20 | 50 | 400 | 40 | 10 | 148 | 0.40 | 3.59 | 3.27 |
| | | | | | | | | |
| 20 | 80 | 200 | 40 | 5 | 129 | 0.37 | 6.18 | 4.74 |
| 20 | 80 | 400 | 40 | 10 | 189 | 0.40 | 3.23 | 2.82 |
| | | | | | | | | |
| 40 | 60 | 200 | 40 | 5 | 108 | 0.32 | 8.79 | 6.45 |
| 40 | 60 | 400 | 40 | 10 | 141 | 0.40 | 3.16 | 2.56 |
| | | | | | | | | |
| 40 | 110 | 200 | 40 | 5 | 135 | 0.38 | 7.95 | 5.46 |
| 40 | 110 | 400 | 40 | 10 | 156 | 0.41 | 2.88 | 2.80 |

The results of this second set of experimental work are presented in FIGURES 7 through 14 of the drawings, with yield, bulk density or xylene soluble content plotted inordinate versus various component ratios plotted on the abscissa for different suites of first and second contact times. As in the drawings described previously, in each of the FIGURES 7 through 14, the curves are labelled by the legends A, B and C, to correspond to the order of addition Protocols A, B and C.

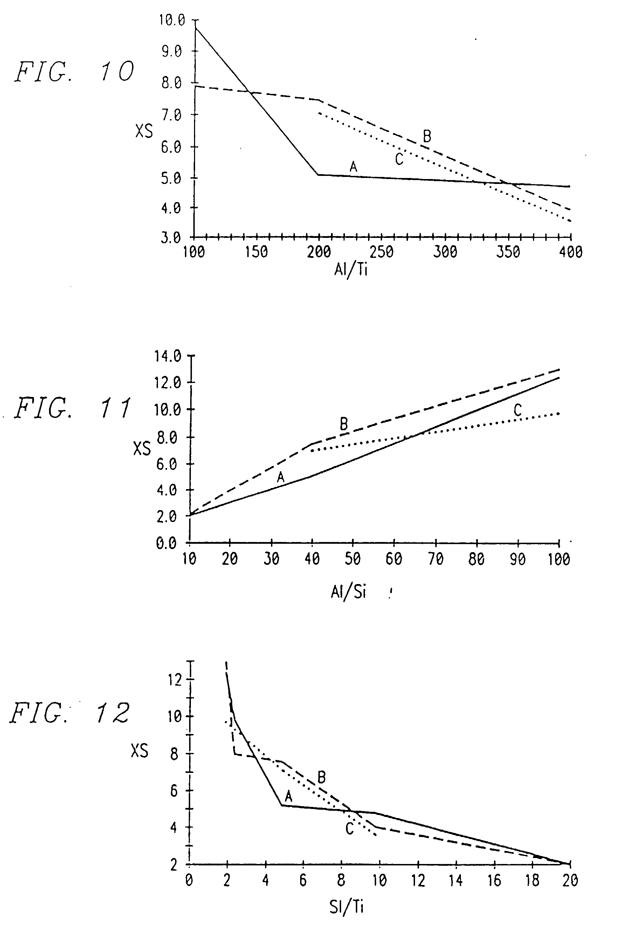

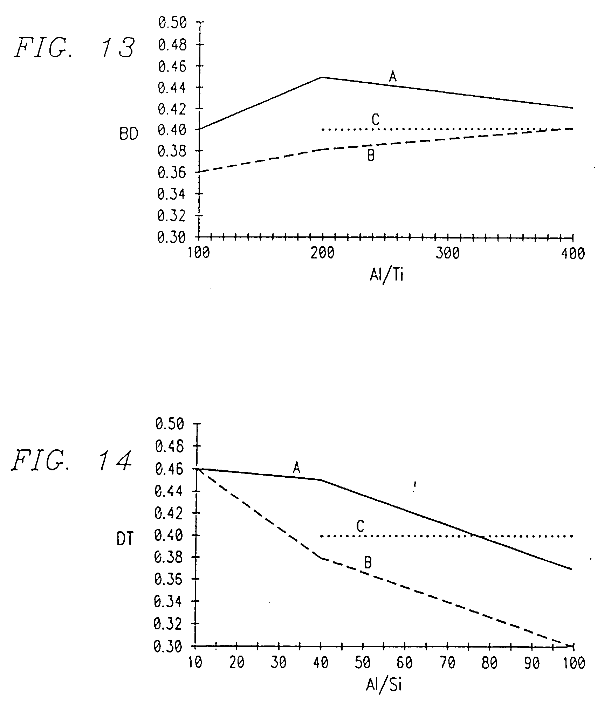

In the drawings, FIGURES 7 and 8 are graphs of yield, Y, in grams versus aluminum/titanium mole ratio, Al/Ti. FIGURE 9 is a graph of yield, Y, for the three orders of addition plotted as a function of the aluminum/silicon mole (atomic) ratio, Al/Si, plotted on the abscissa. FIGURES 10 and 11 are graphs of percent xylene content, XS, plotted on the ordinate versus aluminum/titanium and aluminum/silicon mole ratios, respectively. In FIGURE 12, the xylene soluble content is plotted on the ordinate as a function of silicon/titanium mole ratio, Si/Ti, on the abscissa, but at varying aluminum/titanium ratios. FIGURES 13 and 14 are graphs of bulk density (BD) in g/cm³ on the ordinate versus aluminum/titanium and aluminum/silicon mole ratios, respectively.

In FIGURES 7 and 9 through 14, the first and second contact times were maintained at 20 seconds and 50 seconds, respectively. In FIGURE 8, the initial and secondary contact times were 20 and 80 seconds, respectively. In FIGURES 7, 8, 10 and 13, where the results are plotted versus changing aluminum/titanium ratios, the aluminum/silicon ratio was maintained constant at 40. In FIGURES 9, 11 and 14, where the aluminum/silicon ratio was varied, the aluminum/titanium ratio was maintained at 200.

From the foregoing experimental work presented in Tables V through VII and FIGURES 7 through 14, it will be recognized that for Protocol A involving initial contact of the organoaluminum compound and the transition metal catalyst component, good results in yield can be achieved over a wide range of initial and secondary contact times when the aluminum/titanium and aluminum/silicon ratios are at about 200 and 40, respectively. However, still good results can be achieved when the aluminum/titanium ratio is varied up to 400, which, at an aluminum/silicon ratio of 40, corresponds to a silicon/titanium mole ratio of 10. Similarly, good results can be achieved in terms of bulk density and xylene solubles under the aforementioned conditions. Desirably, the silicon/transition metal ratio should be no more than 10. It can be lower. Relatively good results in terms of yield can be achieved at a silicon/transition metal ratio of about 2, corresponding to an aluminum/silicon ratio of 100 and an aluminum/transition metal ratio of 200.

When xylene solubles are considered alone, there is generally less latitude in terms of primary and secondary contact times than is the case when considering yield and bulk density. In general, the best (lowest) xylene soluble content of the polymer product results when aluminum/silicon ratios are about 40, with the aluminum/transition metal ratio varying from 200 to 400 for initial and secondary contact times of about 2 to 40 and 60 to 120 seconds, respectively. However, the very lowest xylene soluble content was achieved at short initial and secondary contact times of 20 and 50 seconds, respectively at aluminum/titanium ratios of 200 and aluminum/silicon ratios of 10. Good results here were also achieved in terms of bulk density, although not for yield.

For Protocol B involving initial mixing of the organoaluminum compound and the organosilicon compound, the best results in terms of yield were achieved under the same conditions of aluminum/transition metal and aluminum/silicon ratios as described previously. In addition, good results in terms of yield, bulk density and xylene contents were achieved at aluminum/transition metal and aluminum/silicon ratios of 20 and 10, respectively similarly as described above for Protocol A, but in addition, good results in terms of yield were achieved at this value also.

For the third order of addition, very short initial and secondary contact times as noted previously, could be employed in order to arrive at good results in terms of yield and relatively good results in terms of bulk density and xylene content at aluminum/transition metal and aluminum/silicon ratios of 20 and 40, respectively. When only yield is considered, satisfactory results can be achieved at substantially higher aluminum/silicon ratios of 100 and aluminum/titanium ratio of 200, again, at relatively short initial and secondary contact times of 20 and 50 seconds, respectively. Longer contact times of 40 and 110 seconds could be employed where the aluminum/transition metal and aluminum/silicon ratios were 400 and 40, respectively, although here the yields and bulk densities were not as good.

Yet a further aspect of the invention illustrated in FIGURES 15 and 16, involves systems for combining the components of a multi-component catalyst system and which may be used to implement the various precontact procedures as indicated previously. Preferably, the system comprises at least four chambers with flow passageway means connecting the chambers in series to provide a first interconnecting flow passage between the first and second chambers, and second and third such passageways extending respectively between the second and third chambers and the third and fourth chambers. Valve means are interposed at least in the second and third interconnecting passages. Each of the second and fourth chambers is provided with an inlet opening separate from the interconnecting flow passages and a vent opening separate from the inlet openings and the interconnecting flow passages. The fourth chamber is further provided with an outlet opening extending from the fourth chamber. In a more specific aspect of the invention, this system is provided with a flushing inlet passage for each of the four chambers which provides for the introduction of flushing fluid into each of the chambers. Each of these flushing passages are connected to a manifold which, in turn, is adapted to be connected to a source of flushing fluid such as nitrogen.

More specifically and with further reference to the drawings, FIGURE 15 presents a schematic illustration showing one embodiment of a system for combining the components of a multi-component catalyst system in accordance with the present invention. As shown in FIGURE 15, there is provided a four chamber contacting assembly 10 which is provided with a parallel manifolding system 12 and is connected to a reactor 14. In a system designed for experimental work to which the present invention is particularly well suited, the reactor 14 will take the form of batch-type reaction vessel. Batch-type reactors are involved in forming shaped articles through RIM operations as described earlier. However, as will be described in greater detail hereinafter, the reactor configuration may take other forms. Particularly in the case of large scale commercial operations, such reactors will normally take the form of continuous or semi-continuous loop-type reactors.

The assembly 10 comprises four reaction chambers 16, 17, 18 and 19, which are connected in series by interconnecting passageways 21, 22 and 23. Each of the interconnecting passageways are provided with a valve 21a, 22a and 23a, as shown. In some applications, the uppermost valve 21a may be dispensed with, although as a practical matter, in order to provide universality of application, each of the interconnecting passageways will be provided valves as shown.

Each of the vessels 16, 17, 18 and 19 are also provided with separate valved component inlets and outlet vents indicated by reference characters post-scripted by a and b, respectively. For example, vessel 16 is provided with a valved inlet 16a for the introduction of a first component and a valved vent 16b to be used in venting the vessel either during the introduction of component or prior thereto. The remaining chambers are provided with similar component inlets and vents, as indicated.

The manifold system 12 includes a main manifold line 22 and lateral flushing inlet lines 16c, 17c, 18c and 19c extending to vessels 16, 17, 18 and 19, respectively. Line 22 is connected through a valved inlet 24 to a nitrogen source. The manifold is also adapted to be connected through a second manifold inlet 25 to a secondary source of flushing fluid, in this case, a liquid used in cleaning the vessels. In the configuration shown, inlet 25 is provided with a three-way, two position valve 26. The assembly is connected to reactor 14 through valved passage 28 extending from the outlet of the chamber 19.

In an embodiment of the invention configured for laboratory experimentation as described earlier, the series-connected chambers were provided by 40 ml high pressure bombs formed of stainless steel. The passages extending to and from the high pressure bombs were provided by means of 0.635 cm (1/4 inch) stainless steel tubing equipped with two-way, two-position valves, with the exception of the three-way valve 26, also formed of stainless steel. The reactor used for the experimental work was a two liter "Zipperclave" reactor as previously described.

In the previously described experimental work, the assembly was configured in a vertical orientation as shown so that flow from one vessel to the next and into the reactor was under the influence of gravity. In preparing the assembly for experimental work use, nitrogen was flushed into the four-bomb assembly and the reactor through the manifold system. The manifold system was also employed to supply nitrogen in the course of discharging the contents of one bomb to the next bomb in the laboratory work.

The four-chamber, series-connected configuration of FIGURE 15 is useful in a preferred embodiment of the invention used in formulating Ziegler-type catalysts in which the cocatalyst and transition metal catalyst components of a Ziegler-type catalyst system are initially mixed together, followed by contact of the sub-mixture with the electron donor component that is the previously described Protocol A. This configuration normally will be preferred for use with other catalyst components as described below. However, an alternative configuration employing two parallel chambers connected in series with two subsequent series-connected chambers, can also be used to meet certain situations. This modified form of combining assembly is illustrated in FIGURE 16. With the exception of the parallel series connection of chambers 16, 17 and 18, the system of FIGURE 16 is identical to that of FIGURE 15 and in FIGURE 16, like components are designated by the same reference characters as used in FIGURE 15. As shown in FIGURE 16, chambers 16 and 17 are parallel to one another and are connected in series with the third chamber 18 by means of a T connection 32.

The system of FIGURE 16 can be employed where the two catalyst components to be initially contacted are both liquids. For example, the situation would arise where one catalyst component is organoaluminum co-catalyst, such as triethylaluminum, and the other is an electron donor, such as CMDS as in Protocol B. Both such liquids are oleophilic miscible and a parallel series arrangement is shown with the first contact can be carried out by flowing both liquids at the same time from their respective chambers through the mixing T 32 and into chamber 18 can be used to facilitate the initial contact procedure. The configuration of FIGURE 15, can on the other hand, be used to advantage where one of the two initial catalyst components is a solid as in the case of a transition metal catalyst component of a Ziegler-type catalyst system and an organoaluminum co-catalyst component. Here, the catalyst component can be charged to the second chamber 17 in suspension in an oleaginous liquid. The co-catalyst component can be charged to the first chamber 16 and when it is desired to mix the two, valve 21a is opened to displace the co-catalyst from chamber 16 through line 21 into chamber 17. This is accomplished by means of nitrogen supplied via the manifold inlet 16c, together with gravity flow from chamber 16 into chamber 17. Concomitantly with, or shortly after the opening of valve 21a, valve 22a in the outlet from chamber 17, is opened. Thus, the liquid in chamber 16 becomes mixed with the solid slurried component present in chamber 17 and functions not only to form the first submixture, but also to flush the catalyst component into the empty third chamber 18. Valve 23a, is retained closed for the desired first contact time, after which it is opened to allow the mixed first and second components to flow into the fourth chamber 19, where they are mixed with the third catalyst component, an electron donor and in the example given, disposed within this chamber. After the desired second contact time, valve 28 is opened and the three component catalyst system is charged into the reactor. This is accomplished with a nitrogen flush supplied via the manifold and line 16c to the top vessel and then through the successive passages 21, 22 and 23. After the contents of the assembly are discharged into the reactor, valve 28 is closed and the polymerization reaction allowed to proceed under the desired conditions of time, temperature and pressure.

Pre-polymerization of the catalyst system can be accomplished by means of a linear pre-polymerization reactor as described below with reference to FIGURE 17. However, in batch-type polymerizations, such as may be involved in experimental work, pre-polymerization can be accomplished in the assembly itself by simply charging one or all of the chambers 16 through 19 with the pre-polymerizing monomer and after the desired pre-polymerizing time, then opening valve 28 and discharging the contents to the reactor. For example, in the polymerization of propylene, pre-polymerization can be accomplished by filling the assembly with liquid propylene at the conclusion of the desired second contact time and after the desired pre-polymerization time, then opening valve 28 and forcing the contents from the assembly by pumping liquid propylene through the assembly.

Instead of supplying liquid propylene to the entire assembly in the course of pre-polymerization and charging of the pre-polymerized catalyst to the reactor, it will be recognized that valve 23a can be closed and liquid propylene supplied directly to vessel 19. However, where it is desired to regulate the amounts of materials charged to the reactor as closely as possible, as in comparative experimental test runs, it often times will be desired to charge each of the chambers with liquid propylene, or other monomers as the case may be, and discharging the liquid propylene serially through the chambers and into the polymerization reactor.

It will be recognized that each of the foregoing configurations provide for very close control over the contact times in formulating multi-component catalyst systems. The four chamber arrangement of FIGURES 15 and 16 are ideally suited for the formulation of three-component systems with the third chamber being initially left vacant as described above, to provide for the first precontacting step. Configurations similar to those shown in FIGURES 15 and 16, but with additional mixing chambers, can, of course, be provided where it is desired to formulate systems comprising four or more components under closely controlled contact times.

The operation of the multi-component systems of the present invention will be similar, regardless of whether used in commercial applications or in laboratory experimental work as described earlier. Before undertaking operation of such systems, they can be cleaned by flushing with a suitable solvent such as hexane or heptane. For example, with reference to FIGURE 15, liquid flushing fluid can be introduced via line 25 and valve 26 into valved inlet 19c leading to the bottom vessel 19. Solvent injection is continued, with valves 21a, 22a and 23a being in the open position and the remaining valves closed, in an amount sufficient to flood each of the four vessels. Valve 19c can then be closed and valve 19a, or 28 if the assembly is not connected to a reactor, then opened in order to drain fluid from the assembly. Nitrogen can then be supplied to the assembly via inlet 16c under pressure to displace any solvent remaining in the assembly and thereafter, sufficient nitrogen can be introduced to arrive at the desired nitrogen pressure within the assembly, usually a few pounds per square inch atmospheric. Subsequently, the various catalyst components can be introduced into the appropriate chambers as described previously. In this step, the appropriate vent valves will be opened to allow nitrogen to be displaced from the chambers as the components are introduced.

Turning now to FIGURE 17 of the drawings, there is illustrated schematically an embodiment of the present invention employing a four chamber precontact assembly of the type described above in conjunction with a tubular pre-polymerization reactor leading to a continuous flow polypropylene reactor. The continuous flow reactor 40 takes the form of a loop 42 of the configuration shown which is equipped with an impeller 43. As will be understood by those skilled in the art, the impeller functions to circulate the polymerization reaction mass continuously through the loop at controlled temperature and pressure conditions. The desired polymer product is withdrawn either continuously or intermittently from the reactor loop 42 via outlet line 45. Propylene is supplied to the reactor by means of a main propylene supply line 46. A relatively small amount of the propylene from the supply source is withdrawn via a bypass line 48 and supplied to a tubular pre-polymerization reactor 50. Reactor 50 is of the type described in more detail in the aforementioned Patent No. 4,767,735. By way of example, the pre-polymerization reactor 50 may be on the order of seven feet long with an internal diameter of 1.016 cm (0.4 inch) to provide a residence time within the reactor 50 of only a few seconds. For a more detailed description of the operation of such tubular pre-polymerization reactor in conjunction with the main polymerization reactor, reference is made to the aforementioned Patent No. 4,767,735, the entire disclosure of which is incorporated herein by reference.

In accordance with the present invention, the pre-polymerization reactor 50 is equipped with a four chamber precontact assembly 51 of a configuration similar to that shown in FIGURE 15. The assembly 51 is connected to the pre-polymerization reactor 50 through a valved inlet 52 and, of course, is also equipped with manifolding and other valved interconnections (not shown in FIGURE 17) as described above with reference to FIGURE 15.

The precontact assembly 51 is operated in accordance with the desired order of addition of the catalyst components and at the conclusion of the second contact time, valve 52 is opened to supply the multi-component catalyst system into the pre-polymerization reactor 50 and then on to the main reactor loop 42. It will be recognized that operation of the assembly 51 will result in intermittent addition of catalyst components to the reactor with the minimum interval between slugs of multi-component catalyst system dictated to some extent by the desired precontact times. Where the precontact times are very short, supply of multi-component catalyst system to the tubular reactor 50 can be nearly continuous. Where longer precontact times are involved, greater intervals between successive applications of the catalyst system to the pre-polymerization reactor will be involved. Where the intervals between supply of catalyst become unacceptably long for the desired configuration and rate of operation for the loop-type reactor 42, two or more precontact assemblies 51 (not shown) can be connected in parallel to the pre-polymerization reactor 50 and operated in alternating sequences.

## Claims

1. In a method for producing a mixture of a Ziegler-type catalyst formulation comprising a transition metal catalyst component, an external electron donor component, and a co-catalyst component, the steps comprising:
(a) contacting a co-catalyst with a transition metal catalyst component for a first contact time within the range of 5-120 seconds;
(b) subsequent to step (a), contacting the mixture produced by step (a) with an electron donor for a second contact time of no more than 110 seconds
or
(a') contacting a co-catalyst with an electron donor component for a first contact time within the range of 5-120 seconds; (b') subsequent to step (a'), contacting the mixture produced by step (a') with a transition metal catalyst component for a second contact time of no more than 110 seconds
or
(a") contacting the transition metal catalyst component with an external electron donor component for a first contact time of no more than 40 seconds;
(b") at the conclusion of the first contact time, contacting the mixture produced in step (a") with a co-catalyst component for a second contact time within the range of no more than 20 seconds and which has a duration shorter than the first contact time.

2. The method of Claim 1, wherein said second contact time is less than the first contact time

3. The method of Claim 1 additionally comprising:
(c) thereafter contacting the mixture of step (b), (b') or (b") with an unsaturated hydrocarbon to effect the polymerization thereof in the presence of said Ziegler-type catalyst formulation to effect pre-polymerization of said catalyst.

4. The method of Claim 1 wherein said transition metal component and said co-catalyst are contacted in step (a).

5. The method of Claim 1 wherein said electron donor component and said co-catalyst component are contacted in step (a').

6. The method of Claim 4 wherein the mixture produced by step (a) is contacted with an electron donor for a second contact time of no more than 30 seconds.

7. The method of Claim 3 wherein said olefin comprises a C₂-C₄ alpha olefin.

8. The method of Claim 4 wherein said organoaluminum co-catalyst component and said transition metal catalyst component are contacted in step (a) in relative amounts to formulate a precursor mixture having a ratio of aluminum to transition metal mole ratio of at least 200 and contacting said mixture with said electron donor component in step (b) to produce a Ziegler-type catalyst formulation of said transition metal catalyst component and said electron donor component in relative amounts to provide an aluminum/silicon ratio of no more than 50.

9. The method of Claim 8, wherein the mole ratio of aluminum to silicon in said mixture is within the range of 20-50.

10. The method of Claim 8, wherein the mole ratio of silicon to transition metal is at least 5.

11. The method of Claim 8, wherein the mole ratio of silicon to transition metal is within the range of 5-20.

12. The method of Claim 8, wherein the mole ratio of silicon to transition metal is within the range of 10-20.

13. The method of Claim 1 wherein said transition metal component is a halide of titanium, zirconium or vanadium.

14. The method of Claim 13, wherein said transition metal component is a titanium tetrahalide supported on a magnesium or zinc based support.

15. The method of Claim 1 wherein said co-catalyst is an aluminum alkyl or an aluminum alkyl halide.

16. The method of Claim 15, wherein said co-catalyst is selected from the group consisting of trimethylaluminum and triethylaluminum.

17. The method of Claim 1 wherein said electron donor is an organodialkoxysilane.

18. The method of Claim 17, wherein said electron donor is cyclohexylmethyldimethoxysilane.

19. The method of Claim 5 wherein the duration of said first contact time is within the range of 5-40 seconds and the duration of said second contact time is not longer than 30 seconds.

20. The method of Claim 19 additionally comprising :
(c) thereafter contacting the mixture of step (b), (b') or (b") with an unsaturated hydrocarbon to effect the polymerization thereof in the presence of said Ziegler-type catalyst formulation to effect pre-polymerization of said catalyst.

21. The method of Claim 5 wherein said co-catalyst component is an organoaluminum and said electron donor component is an organosilicon which are contacted in step (a) in relative amounts to provide a precursor mixture having an aluminum to silicon mole ratio of at least 10 and contacting said precursor mixture with said transition metal catalyst component in step (b) in an amount to provide said Ziegler-type catalyst formulation of said transition metal catalyst component, organosilicon electron donor component and organoaluminum co-catalyst component in relative amounts to provide an aluminum transition metal mole ratio of at least 200 and silicon to transition metal mole ratio of at least 10.

22. The method of Claim 21, wherein said aluminum to silicon mole ratio is within the range of 10-40 and said aluminum to transition metal mole ratio is within the range of 200-400.

23. The method of Claim 21, wherein said transition metal component is a halide of titanium, zirconium, hafnium or vanadium and said co-catalyst is an aluminum alkyl or an aluminum alkyl halide.

24. The method of Claim 23, wherein said transition metal component is supported on a magnesium or zinc based support.

25. The method of Claim 24, wherein said co-catalyst is selected from the group consisting of trimethylaluminum and triethylaluminum.

26. The method of Claim 1 wherein said transition metal component and said electron donor component are contacted in step (a").

27. The method of Claim 26, wherein said olefin comprises a C₂-C₄ alpha olefin and said electron donor is an organosiloxane.

28. The method of Claim 1 additionally comprising:
a) providing a plurality of connected chambers including first and second chambers having first and second components, respectively, and connected with a first passageway, a third chamber connected to said second chamber by means of a second passageway, and a fourth chamber connected to said third chamber by a third passageway and containing a third component;
b) discharging the contents of said first chamber from said first chamber via said first passageway into said second chamber and discharging the contents of said second chamber including said first and second components into said third chamber via said second passageway and maintaining said first and second components in mixture with one another in said third chamber to provide a desired first contact time; and
c) thereafter, discharging the contents from said third chamber via said third passageway into said fourth chamber where they are mixed with said third component for a desired second contact time.

29. The method of Claim 28, wherein said first and second catalyst components are respectively an organoaluminum co-catalyst component of a Ziegler-type catalyst system and a transition metal catalyst component of a Ziegler-type catalyst system and said third component is an electron donor component of said Ziegler-type catalyst system.

30. The method of Claim 29, further comprising the step of prior to the polymerization of said monomer and at the conclusion of said second contact time, precontacting said catalyst system mixture of said first, second and third catalyst components with an olefinic compound to cause pre-polymerization of said catalyst system and thereafter supplying said pre-polymerized catalyst to said polymerization reactor.

31. The method of Claim 30, wherein said catalyst system mixture is contacted in said pre-polymerization step by charging said fourth chamber with liquid propylene for a designated time interval and thereafter discharging the contents of said fourth chamber into said polymerization reactor.

32. The method of Claim 31, wherein said precontacting is carried out by charging each of said, first, second, third and fourth chambers with liquid propylene and discharging said liquid propylene serially through said chambers and into said polymerization reactor.

33. The method of Claim 1 additionally comprising:
a) providing a plurality of chambers including first and second chambers in parallel with one another and each connected to a third chamber through first and second passageways, respectively, said first and second chambers containing first and second components, respectively;
b) discharging the contents of said first chamber via said first passageway into said third chamber and discharging the contents of said second chamber via said second passageway into said third chamber to provide a mixture of said first and second components in mixture with one another in said third chamber to provide a desired first contact time; and
c) thereafter, discharging the contents from said third chamber via a third passageway extending from said third chamber to a fourth chamber containing a third component into said fourth chamber where they are mixed with said third catalyst component for a desired second contact time.

34. The method of Claim 33, wherein said first catalyst component is an organoaluminum co-catalyst component of a Ziegler-type catalyst system, the second of said components is an electron donor component of said Ziegler-type catalyst system, and said third component in said fourth chamber is a transition metal catalyst component of said Ziegler-type catalyst.

35. The method of Claim 26 wherein said electron donor is an organosilicon, said co-catalyst is an organoaluminum, said organosilicon and said transition metal catalyst component are contacted in step (a") in relative amounts to provide a precursor mixture having a mole ratio of silicon to transition metal of at least 5 and contacting said precursor mixture with said organoaluminum co-catalyst component in step (b") to produce a Ziegler-type catalyst formulation of said transition metal catalyst component electron donor component in relative amounts to provide an aluminum/silicon mole ratio of no more than 40.

36. In a method for olefin polymerization, the steps comprising:
(a) producing a mixture of a Ziegler-type catalyst formulation with a transition metal catalyst component, an external electron donor component, and a co-catalyst component to be charged to a polymerization reactor by:
(1) contacting a co-catalyst component with a transition metal catalyst component for a first contact time within the range of 5-120 seconds;
(2) subsequent to step (1), contacting the mixture produced by step (1) with an external electron donor component for a second contact time of no more than 110 seconds; and
or
(1') contacting a co-catalyst component with an external electron donor component for a first contact time within the range of 5-120 seconds;
(2') subsequent to step (1'), contacting the mixture produced by step (1') with a transition metal catalyst component for a second contact time of no more than 110 seconds; and
or
(1") contacting a transition metal catalyst component with an external electron donor component for a first contact time of no more than 40 seconds;
(2") at the conclusion of the first contact time, contacting the mixture produced in step (1) with a co-catalyst component for a second contact time within the range of no more than 20 seconds and which has a duration shorter than the first contact time; and
(b) thereafter contacting the mixture of step (2), (2') or (2") with an unsaturated hydrocarbon to effect the polymerization thereof in the presence of said Ziegler-type catalyst formulation.

37. The method of Claim 36 additionally comprising:
a) providing a plurality of connected chambers including first and second chambers having first and second components, respectively, and connected with a first passageway, a third chamber connected to said second chamber by means of a second passageway, and a fourth chamber connected to said third chamber by a third passageway and containing a third component;
b) discharging the contents of said first chamber from said first chamber via said first passageway into said second chamber and discharging the contents of said second chamber including said first and second components into said third chamber via said second passageway and maintaining said first and second components in mixture with one another in said third chamber to provide a desired first contact time; and
c) thereafter, discharging the contents from said third chamber via said third passageway into said fourth chamber where they are mixed with said third component for a desired second contact time;
d) discharging the contents of said fourth chamber into a polymerization reactor where they are contacted with an olefinic monomer to effect polymerization of said monomer.

38. The method of Claim 36 additionally comprising:
a) providing a plurality of chambers including first and second chambers in parallel with one another and each connected to a third chamber through first and second passageways, respectively, said first and second chambers containing first and second components, respectively;
b) discharging the contents of said first chamber via said first passageway into said third chamber and discharging the contents of said second chamber via said second passageway into said third chamber to provide a mixture of said first and second components in mixture with one another in said third chamber to provide a desired first contact time; and
c) thereafter, discharging the contents from said third chamber via a third passageway extending from said third chamber to a fourth chamber containing a third component into said fourth chamber where they are mixed with said third catalyst component for a desired second contact time; and
d) thereafter, discharging the contents of said fourth chamber into a polymerization reactor where they are contacted with an olefinic monomer to effect polymerization of said monomer.

## Patentansprüche

1. In einem Verfahren zum Herstellen einer Mischung einer Katalysatorformulierung vom Ziegler-Typ, umfassend eine Übergangsmetallkatalysatorkomponente, eine externe Elektronendonorkomponente und eine Co-Katalysatorkomponente, wobei die Stufen umfassen:
(a) in Kontakt bringen eines Cokatalysators mit einer Übergangsmetallkatalysatorkomponente für eine erste Kontaktzeit im Bereich von 5-120 Sekunden,
(b) im Anschluß an Stufe (a) in Kontakt bringen der Mischung, die durch Stufe (a) hergestellt ist, mit einem Elektronendonor für eine zweite Kontaktzeit von nicht mehr als 110 Sekunden oder
(a') in Kontakt bringen eines Cokatalysators mit einer Elektronendonorkomponente für eine erste Kontaktzeit im Bereich von 5-120 Sekunden,
(b') im Anschluß an Stufe (a') in Kontakt bringen der durch Stufe (a') erzeugten Mischung mit einer Übergangsmetallkatalysatorkomponente für eine zweite Kontaktzeit von nicht mehr als 110 Sekunden oder
(a") in Kontakt bringen der Übergangsmetallkatalysatorkomponente mit einer externen Elektronendonorkomponente für eine erste Kontaktzeit von nicht mehr als 40 Sekunden,
(b") am Schluß der ersten Kontaktzeit in Kontakt bringen der in Stufe (a") erzeugten Mischung mit einer Cokatalysatorkomponente für eine zweite Kontaktzeit im Bereich von nicht mehr als 20 Sekunden, und welche eine kürzere Dauer als die erste Kontaktzeit hat.

2. Verfahren nach Anspruch 1, wobei die zweite Kontaktzeit geringer als die erste Kontaktzeit ist.

3. Verfahren nach Anspruch 1, zusätzlich umfassend:
(c) anschließendes in Kontakt bringen der Mischung aus Stufe (b), (b') oder (b") mit einem ungesättigten Kohlenwasserstoff unter Bewirken der Polymerisation davon in der Anwesenheit der Ziegler-Typ-Katalysatorformulierung unter Durchführen von Vorpolymerisation des Katalysators.

4. Verfahren nach Anspruch 1, wobei die Übergangsmetallkomponente und der Cokatalysator in Stufe (a) in Kontakt gebracht werden.

5. Verfahren nach Anspruch 1, wobei die Elektronendonorkomponente und die Cokatalysatorkomponente in Stufe (a') in Kontakt gebracht werden.

6. Verfahren nach Anspruch 4, wobei die durch Stufe (a) erzeugte Mischung mit einem Elektronendonor für eine zweite Kontaktzeit von nicht mehr als 30 Sekunden in Kontakt gebracht wird.

7. Verfahren nach Anspruch 3, wobei das Olefin ein C₂-C₄ alpha Olefin umfaßt.

8. Verfahren nach Anspruch 4, wobei die Organoaluminium-Cokatalysatorkomponente und die Übergangsmetallkatalysatorkomponente in Stufe (a) in relativen Mengen in Kontakt gebracht werden unter Formulieren einer Vorläufermischung mit einem Verhältnis von Aluminium zu Übergangsmetall-Molverhältnis von mindestens 200, und die Mischung mit der Elektronendonorkomponente in Stufe (b) unter Herstellen einer Katalysatorformulierung vom Ziegler-Typ der Übergangsmetallkatalysatorkomponente und der Elektronendonorkomponente in relativen Mengen in Kontakt gebracht werden, wodurch ein Aluminium/Silicium Verhältnis von nicht mehr als 50 geliefert wird.

9. Verfahren nach Anspruch 8, wobei das Molverhältnis von Aluminium zu Silicium in der Mischung im Bereich von 20 -50 liegt.

10. Verfahren nach Anspruch 8, wobei das Molverhältnis von Silicium zu Übergangsmetall mindestens 5 beträgt.

11. Verfahren nach Anspruch 8, wobei das Molverhältnis von Silicium zu Übergangsmetall im Bereich von 5-20 liegt.

12. Verfahren nach Anspruch 8, wobei das Molverhältnis von Silicium zu Übergangsmetall im Bereich von 10-20 liegt.

13. Verfahren nach Anspruch 1, wobei die Übergangsmetallkomponente ein Halogenid von Titan, Zirkonium oder Vanadium ist.

14. Verfahren nach Anspruch 13, wobei die Übergangsmetallkomponente ein Titantetrahalogenid, getragen auf einem auf Magnesium oder Zink basierendem Träger ist.

15. Verfahren nach Anspruch 1, wobei der Cokatalysator ein Aluminiumalkyl oder ein Aluminiumalkylhalogenid ist.

16. Verfahren nach Anspruch 15, wobei der Cokatalysator aus der Gruppe aus Trimethylaluminium und Triethylaluminium ausgewählt wird.

17. Verfahren nach Anspruch 1, wobei der Elektronendonor ein Organodialkoxysilan ist.

18. Verfahren nach Anspruch 17, wobei der Elektronendonor Cyclohexylmethyldimethoxysilan ist.

19. Verfahren nach Anspruch 5, wobei die Dauer der ersten Kontaktzeit im Bereich von 5-40 Sekunden liegt, und die Dauer der zweiten Kontaktzeit nicht länger als 30 Sekunden beträgt.

20. Verfahren nach Anspruch 19, zusätzlich umfassend: (c) anschließendes in Kontakt bringen der Mischung der Stufe (b), (b') oder (b") mit einem ungesättigten Kohlenwasserstoff unter Bewirken der Polymerisation davon in der Gegenwart der Ziegler-Typ-Katalysator-Formulierung unter Bewirken von Vorpolymerisation des Katalysators.

21. Verfahren nach Anspruch 5, wobei die Cokatalysatorkomponente ein Organoaluminium ist, und die Elektronendonorkomponente ein Organosilicium ist, welche in Stufe (a) in relativen Mengen in Kontakt gebracht werden, wodurch eine Vorläufermischung mit einem Aluminium zu Silicium Molverhältnis von mindestens 10 geliefert wird, und die Vorläufermischung mit der Übergangsmetallkatalysatorkomponente in Stufe (b) in einer Menge in Kontakt gebracht wird, wodurch die Ziegler-Typ-Katalysator-Formulierung der Übergangsmetallkatalysatorkomponente , Organosiliciumelektronendonorkomponente und Organoaluminium-Cokatalysatorkomponente in relativen Mengen geliefert wird, wobei ein Aluminium Übergangsmetall-Molverhältnis von mindestens 200 und Silicium zu Übergangsmetall-Molverhältnis von mindestens 10 geliefert wird.

22. Verfahren nach Anspruch 21, wobei das Aluminium zu Silicium Molverhältnis in dem Bereich von 10-40 liegt, und das Aluminium zu Übergangsmetall-Molverhältnis in dem Bereich von 200 - 400 liegt.

23. Verfahren nach Anspruch 21, wobei die Übergangsmetallkomponente ein Halogenid von Titan, Zirkonium, Hafnium oder Vanadium ist, und der Cokatalysator ein Aluminiumalkyl oder ein Aluminiumalkylhalogenid ist.

24. Verfahren nach Anspruch 23, wobei die Übergangsmetallkomponente auf einem auf Magnesium oder Zink basierenden Träger getragen wird.

25. Verfahren nach Anspruch 24, wobei der Cokatalysator ausgewählt ist aus der Gruppe aus Trimethylaluminium und Triethylaluminium.

26. Verfahren nach Anspruch 1, wobei die Übergangsmetallkomponente und die Elektronendonorkomponente in Stufe (a") in Kontakt gebracht werden.

27. Verfahren nach Anspruch 26, wobei das Olefin ein C₂-C₄ alpha Olefin umfaßt, und der Elektronendonor ein Organosiloxan ist.

28. Verfahren nach Anspruch 1, zusätzlich umfassend:
a) Liefen einer Vielzahl von verbundenen Kammern, einschließend erste und zweite Kammern mit ersten und zweiten Komponenten und verbunden mit einem ersten Durchlaßweg, eine dritte Kammer verbunden mit der zweiten Kammer mittels eines zweiten Durchlaßweges, und eine vierte Kammer verbunden mit der dritten Kammer durch einen dritten Durchlaßweg und enthaltend eine dritte Komponente,
b) Entlassen des Inhalts der ersten Kammer aus der ersten Kammer über den ersten Durchlaßweg in die zweite Kammer und Entlassen des Inhalts der zweiten Kammer, welche die ersten und zweiten Komponenten einschließt, in die dritte Kammer über den zweiten Durchlaßweg und Aufrechterhalten der ersten und zweiten Komponenten in Mischung miteinander in der dritten Kammer unter zur Verfügungstellen einer gewünschten ersten Kontaktzeit, und
c) anschließendes Entlassen des Inhalts aus der dritten Kammer über den dritten Durchlaßweg in die vierte Kammer, wo sie mit der dritten Komponente für eine gewünschte zweite Kontaktzeit gemischt werden.

29. Verfahren nach Anspruch 28, wobei die ersten und zweiten Katalysatorkomponenten eine Organoaluminium-Cokatalysatorkomponente eines Ziegler-Typ Katalysatorsystems und eine Übergangsmetallkatalysatorkomponente eines Ziegler-Typ-Katalysatorsystems sind, und die dritte Komponente eine Elektronendonorkomponente des Ziegler-Typ-Katalysatorsystems ist.

30. Verfahren nach Anspruch 29, ferner umfassend die Stufe vor der Polymerisation des Monomeren und am Schluß der zweiten Kontaktzeit des in Kontakt bringens der Katalysatorsystemmischung der ersten, zweiten und dritten Katalysatorkomponenten mit einer olefinischen Verbindung unter Bewirken von Vorpolymerisation des Katalysatorsystems und anschließendes Liefern des vorpolymerisierten Katalysators zu dem Polymerisationsreaktor.

31. Verfahren nach Anspruch 30, wobei die Katalysatorsystemmischung in der Vorpolymerisationsstufe in Kontakt gebracht wird, indem die vierte Kammer mit flüssigem Propylen für ein bestimmtes Zeitintervall gefüllt wird, und anschließend der Inhalt der vierten Kammer in den Polymerisationsreaktor entlassen wird.

32. Verfahren nach Anspruch 31, wobei das vorher in Kontakt bringen durchgeführt wird, indem jede der ersten, zweiten, dritten und vierten Kammern mit flüssigem Propylen gefüllt wird, und das flüssige Propylen serienmäßig durch die Kammern und in den Polymerisationsreaktor entlassen wird.

33. Verfahren nach Anspruch 1, zusätzlich umfassend:
a) zur Verfügung stellen einer Vielzahl von Kammern, einschließend erste und zweite Kammern parallel zueinander, und jede verbunden mit einer dritten Kammer durch erste und zweite Durchlaßwege, wobei die ersten und zweiten Kammern erste und zweite Komponenten enthalten;
b) Entlassen des Inhalts der ersten Kammer über den ersten Durchlaßweg in die dritte Kammer und Entlassen des Inhalts der zweiten Kammer über den zweiten Durchlaßweg in die dritte Kammer unter zur Verfügung stellen einer Mischung aus den ersten und zweiten Komponenten in Mischung miteinander in der dritten Kammer, wodurch eine gewünschte erste Kontaktzeit geliefert wird, und
c) danach Entlassen des Inhalts aus der dritten Kammer über einen dritten Durchlaßweg, der sich von der dritten Kammer zu einer vierten Kammer erstreckt, enthaltend eine dritte Komponente in der vierten Kammer, wo sie mit der dritten Katalysatorkomponente für eine gewünschte zweite Kontaktzeit gemischt werden.

34. Verfahren nach Anspruch 33, wobei die erste Katalysatorkomponente eine Organoaluminium-Cokatalysatorkomponente eines Ziegler-Typ-Katalysatorsystems ist, die zweite der Komponenten eine Elektronendonorkomponente des Ziegler-Typ-Katalysatorsystems ist, und die dritte Komponente in der vierten Kammer eine Übergangsmetallkatalysatorkomponente des Ziegler-Typ-Katalysators ist.

35. Verfahren nach Anspruch 26, wobei der Elektronendonor ein Organosilicium ist, der Cokatalysator ein Organoaluminium ist, das Organosilicium und die Übergangsmetallkatalysatorkomponente in Stufe (a'') in relativen Mengen in Kontakt gebracht werden, wodurch eine Vorläufermischung mit einem Molverhältnis von Silicium zu Übergangsmetall von mindestens 5 geliefert wird, und die Vorläufermischung mit der Organoaluminium-Cokatalysatorkomponente in Stufe (b") in Kontakt gebracht wird, wodurch eine Ziegler-Typ-Katalysator-Formulierung aus der Übergangsmetallkatalysatorkomponente und Elektronendonorkomponente in relativen Mengen hergestellt wird, wobei ein Aluminium/Silicium-Molverhältnis von nicht mehr als 40 zur Verfügung gestellt wird.

36. In einem Verfahren für Olefinpolymerisation, wobei die Stufen umfassen:
(a) Herstellen einer Mischung aus einer Ziegler-Typ-Katalysatorformulierung mit einer Übergangsmetallkatalysatorkomponente, einer externen Elektronendonorkomponente und einer Cokatalysatorkomponente, die in einen Polymerisationsreaktor zu füllen ist, durch
(1) in Kontakt bringen einer Cokatalysatorkomponente mit einer Übergangsmetallkatalysatorkomponente für eine erste Kontaktzeit im Bereich von 5-120 Sekunden,
(2) anschließend an Stufe (1) in Kontakt bringen der durch Stufe (1) erzeugten Mischung mit einer externen Elektronendonorkomponente für eine zweite Kontaktzeit von nicht mehr als 110 Sekunden und
oder
(1') in Kontakt bringen einer Cokatalysatorkomponente mit einer externen Elektronendonorkomponente für eine erste Kontaktzeit im Bereich von 5-120 Sekunden,
(2') anschließend an Stufe (1') in Kontakt bringen der durch Stufe (1') erzeugten Mischung mit einer Übergangsmetallkatalysatorkomponente für eine zweite Kontaktzeit von nicht mehr als 110 Sekunden und
oder
(1") in Kontakt bringen einer Übergangsmetallkatalysatorkomponente mit einer externen Elektronendonorkomponente für eine erste Kontaktzeit von nicht mehr als 40 Sekunden,
(2") am Schluß der ersten Kontaktzeit in Kontakt bringen der in Stufe (1) erzeugten Mischung mit einer Cokatalysatorkomponente für eine zweite Kontaktzeit im Bereich von nicht mehr als 20 Sekunden, und welche eine kürzere Dauer als die erste Kontaktzeit hat, und
(b) anschließend in Kontakt bringen der Mischung von Stufe (2), (2') oder (2") mit einem ungesättigten Kohlenwasserstoff unter Bewirken der Polymerisation davon in der Anwesenheit der Ziegler-Typ-Katalysatorformulierung.

37. Verfahren nach Anspruch 36, zusätzlich umfassend:
a) zur Verfügung stellen einer Vielzahl von verbundenen Kammern, einschließend erste und zweite Kammern mit ersten und zweiten Komponenten, und verbunden mit einem ersten Durchlaßweg, eine dritte Kammer, verbunden mit der zweiten Kammer mittels eines zweiten Durchlaßweges, und eine vierte Kammer verbunden mit der dritten Kammer durch einen dritten Durchlaßweg und enthaltend eine dritte Komponente,
b) Entlassen des Inhalts der ersten Kammer aus der ersten Kammer über den ersten Durchlaßweg in die zweite Kammer und Entlassen des Inhalts der zweiten Kammer, welche die ersten und zweiten Komponenten einschließt, in die dritte Kammer über den zweiten Durchlaßweg und Aufrechterhalten der ersten und zweiten Komponenten in Mischung miteinander in der dritten Kammer unter zur Verfügung stellen einer gewünschten ersten Kontaktzeit und
c) danach Entlassen der Inhalte aus der dritten Kammer über den dritten Durchlaßweg in die vierte Kammer, wo sie mit der dritten Komponente für eine gewünschte zweite Kontaktzeit gemischt werden,
d) Entlassen der Inhalte der vierten Kammer in einen Polymerisationsreaktor, wo sie mit einem olefinischen Monomeren unter Bewirken von Polymerisation des Monomeren in Kontakt gebracht werden.

38. Verfahren nach Anspruch 36, zusätzlich umfassend:
a) zur Verfügung stellen einer Vielzahl von Kammern, einschließend erste und zweite Kammern parallel zueinander und jede verbunden mit einer dritten Kammer durch erste und zweite Durchlaßwege, wobei die ersten und zweiten Kammern erste bzw. zweite Komponenten enthalten,
b) Entlassen des Inhalts der ersten Kammer über den ersten Durchlaßweg in die dritte Kammer und Entlassen des Inhalts der zweiten Kammer über den zweiten Durchlaßweg in die dritte Kammer unter zur Verfügung stellen einer Mischung aus den ersten und zweiten Komponenten in Mischung miteinander in der dritten Kammer, wodurch eine gewünschte erste Kontaktzeit geliefert wird, und
c) anschließendes Entlassen der Inhalte aus der dritten Kammer über einen dritten Durchlaßweg, der sich von der dritten Kammer zu einer vierten Kammer erstreckt, welche eine dritte Komponente in der vierten Kammer enthält, wo sie mit der dritten Katalysatorkomponente für eine gewünschte zweite Kontaktzeit gemischt werden, und
d) anschließend Entlassen des Inhalts der vierten Kammer in einen Polymerisationsreaktor, wo sie mit einem olefinischen Monomeren unter Bewirken von Polymerisation des Monomeren in Kontakt gebracht werden.

## Revendications

1. Dans un procédé pour préparer un mélange d'une formulation de catalyseur de type Ziegler comprenant un composant de catalyseur à base d'un métal transitoire, un composant donneur d'électrons externes et un composant de cocatalyseur, les étapes comprenant le fait de:
(a) mettre un cocatalyseur en contact avec un composant de catalyseur à base d'un métal transitoire pendant un premier temps de contact dans le domaine de 5 à 120 secondes;
(b) après l'étape (a), mettre le mélange obtenu à l'étape (a) en contact avec un donneur d'électrons pendant un deuxième temps de contact qui n'est pas supérieur à 110 secondes
ou
(a') mettre un cocatalyseur en contact avec un composant donneur d'électrons pendant un premier temps de contact dans le domaine de 5 à 120 secondes,
(b') après l'étape (a'), mettre le mélange obtenu à l'étape (a') en contact avec un composant de catalyseur à base d'un métal transitoire pendant un deuxième temps de contact qui n'est pas supérieur à 110 secondes
ou
(a") mettre le composant de catalyseur à base d'un métal transitoire en contact avec un composant donneur d'électrons externes pendant un premier temps de contact qui n'est pas supérieur à 40 secondes,
(b") à la fin du premier temps de contact, mettre le mélange obtenu à l'étape (a") en contact avec un composant de cocatalyseur pendant un deuxième temps de contact dans le domaine qui n'est pas supérieur à 20 secondes et dont la durée est inférieure à celle du premier temps de contact.

2. Procédé selon la revendication 1, dans lequel ledit deuxième temps de contact est inférieur au premier temps de contact.

3. Procédé selon la revendication 1, comprenant en outre le fait de:
(c) mettre par la suite en contact le mélange de l'étape (b), de l'étape (b') ou de l'étape (b") avec un hydrocarbure insaturé pour mettre en oeuvre sa polymérisation, en présence de ladite formulation de catalyseur de type Ziegler pour mettre en oeuvre la prépolymérisation dudit catalyseur.

4. Procédé selon la revendication 1, dans lequel ledit composant de métal transitoire et ledit cocatalyseur sont mis en contact à l'étape (a).

5. Procédé selon la revendication 1, dans lequel ledit composant donneur d'électrons et ledit composant de cocatalyseur sont mis en contact à l'étape (a').

6. Procédé selon la revendication 4, dans lequel le mélange obtenu à l'étape (a) est mis en contact avec un donneur d'électrons pendant un deuxième temps de contact qui n'est pas supérieur à 30 secondes.

7. Procédé selon la revendication 3, dans lequel ladite oléfine comprend une alpha-oléfine en C₂-C₄.

8. Procédé selon la revendication 4, dans lequel ledit composant de cocatalyseur à base d'organoaluminium et ledit composant de catalyseur à base d'un métal transitoire sont mis en contact à l'étape (a) dans des quantités relatives pour formuler un mélange à titre de précurseur possédant un rapport molaire de l'aluminium au métal transitoire d'au moins 200 et dans lequel on met ledit mélange en contact avec ledit composant de donneur d'électrons à l'étape (b) pour obtenir une formulation de catalyseur de type Ziegler dudit composant de catalyseur à base d'un métal transitoire et dudit composant donneur d'électrons dans des quantités relatives pour obtenir un rapport aluminium/silicium qui n'est pas supérieur à 50.

9. Procédé selon la revendication 8, dans lequel le rapport molaire de l'aluminium au silicium dans ledit mélange se situe dans le domaine de 20 à 50.

10. Procédé selon la revendication 8, dans lequel le rapport molaire du silicium au métal transitoire s'élève à au moins 5.

11. Procédé selon la revendication 8, dans lequel le rapport molaire du silicium au métal transitoire se situe dans le domaine de 5 à 20.

12. Procédé selon la revendication 8, dans lequel le rapport molaire du silicium au métal transitoire se situe dans le domaine de 10 à 20.

13. Procédé selon la revendication 1, dans lequel ledit composant de métal transitoire est un halogénure de titane, de zirconium ou de vanadium.

14. Procédé selon la revendication 13, dans lequel ledit composant de métal transitoire est un tétrahalogénure de titane déposé sur un support à base de magnésium ou de zinc.

15. Procédé selon la revendication 1, dans lequel ledit cocatalyseur est un alkylaluminium ou un halogénure d'alkylaluminium.

16. Procédé selon la revendication 15, dans lequel ledit cocatalyseur est choisi parmi le groupe constitué par le triméthylaluminium et le triéthylaluminium.

17. Procédé selon la revendication 1, dans lequel ledit donneur d'électrons est un organodialcoxysilane.

18. Procédé selon la revendication 17, dans lequel ledit donneur d'électrons est le cyclohexylméthyldiméthoxysilane.

19. Procédé selon la revendication 5, dans lequel la durée dudit premier temps de contact se situe dans le domaine de 5 à 40 secondes et la durée dudit deuxième temps de contact n'est pas supérieure à 30 secondes.

20. Procédé selon la revendication 19, comprenant en outre le fait de:
(c) mettre par la suite le mélange de l'étape (b), de l'étape (b') ou de l'étape (b") en contact avec un hydrocarbure insaturé pour mettre en oeuvre sa polymérisation en présence de ladite formulation de catalyseur de type Ziegler pour mettre en oeuvre la prépolymérisation dudit catalyseur.

21. Procédé selon la revendication 5, dans lequel ledit composant de cocatalyseur est un organoaluminium et ledit composant donneur d'électrons est un organosilicium qui sont mis en contact à l'étape (a) dans des quantités relatives pour obtenir un mélange à titre de précurseur possédant un rapport molaire aluminium/silicium s'élevant à au moins 10 et dans lequel on met ledit mélange à titre de précurseur en contact avec ledit composant de catalyseur à base d'un métal transitoire à l'étape (b) en une quantité telle que l'on obtient ladite formulation de catalyseur de type Ziegler comprenant ledit composant de catalyseur à base d'un métal transitoire, de l'organosilicium à titre de composant donneur d'électrons et de l'organoaluminium à titre de composant de cocatalyseur dans des quantités relatives pour obtenir un rapport molaire aluminium/métal transitoire s'élevant à au moins 200 et un rapport molaire silicium/métal transitoire s'élevant à au moins 10.

22. Procédé selon la revendication 21, dans lequel ledit rapport molaire aluminium/silicium se situe dans le domaine de 10 à 40 et ledit rapport molaire aluminium/métal transitoire se situe dans le domaine de 200 à 400.

23. Procédé selon la revendication 21, dans lequel ledit composant de métal transitoire est un halogénure de titane, de zirconium, de hafnium ou de vanadium et ledit cocatalyseur est un alkylaluminium ou un halogénure d'alkylaluminium.

24. Procédé selon la revendication 23, dans lequel ledit composant de métal transitoire est déposé sur un support à base de magnésium ou de zinc.

25. Procédé selon la revendication 24, dans lequel ledit cocatalyseur est choisi parmi le groupe constitué par le triméthylaluminium et le triéthylaluminium.

26. Procédé selon la revendication 1, dans lequel ledit composant de métal transitoire et ledit composant donneur d'électrons sont mis en contact à l'étape (a").

27. Procédé selon la revendication 26, dans lequel ladite oléfine comprend une alpha-oléfine en C₂-C₄ et ledit donneur d'électrons est un organosiloxane.

28. Procédé selon la revendication 1, comprenant en outre le fait de:
a) procurer plusieurs chambres reliées englobant des première et deuxième chambres possédant des premier et deuxième composants respectivement et reliées à un premier passage, une troisième chambre reliée à ladite deuxième chambre à l'aide d'un deuxième passage et une quatrième chambre reliée à ladite troisième chambre par un troisième passage et contenant un troisième composant;
b) décharger le contenu de ladite première chambre depuis ladite première chambre via ledit premier passage jusque dans ladite deuxième chambre et décharger le contenu de ladite deuxième chambre englobant lesdits premier et deuxième composants dans ladite troisième chambre via ledit deuxième passage, et maintenir lesdits premier et deuxième composants en mélange l'un avec l'autre dans ladite troisième chambre pour obtenir un premier temps de contact désiré; et
c) par la suite, décharger le contenu depuis ladite troisième chambre via ledit troisième passage jusque dans ladite quatrième chambre où il est mélangé avec ledit troisième composant pendant un deuxième temps de contact désiré.

29. Procédé selon la revendication 28, dans lequel lesdits premier et deuxième composants de catalyseurs représentent respectivement un composant de cocatalyseur à base d'organoaluminium d'un système de catalyseur de type Ziegler et un composant de catalyseur à base d'un métal transitoire d'un système de catalyseur de type Ziegler, ledit troisième composant étant un composant donneur d'électrons dudit système de catalyseur de type Ziegler.

30. Procédé selon la revendication 29, comprenant en outre l'étape consistant à, avant la polymérisation dudit monomère et au terme dudit deuxième temps de contact, mettre ledit mélange du système de catalyseur comprenant lesdits premier, deuxième et troisième composants de catalyseurs en contact préalable avec un composé oléfinique pour obtenir une prépolymérisation dudit système de catalyseur et, par la suite, approvisionner ledit catalyseur soumis à une prépolymérisation audit réacteur de polymérisation.

31. Procédé selon la revendication 30, dans lequel on met ledit mélange de système de catalyseur en contact dans ladite étape de prépolymérisation en chargeant ladite quatrième chambre avec du propylène liquide pendant un intervalle de temps déterminé et en déchargeant par la suite le contenu de ladite quatrième chambre dans ledit réacteur de polymérisation.

32. Procédé selon la revendication 31, dans lequel on effectue ladite mise en contact préalable en chargeant chacune desdites première, deuxième, troisième et quatrième chambres avec du propylène liquide et en déchargeant ledit propylène liquide de manière successive à travers lesdites chambres et dans ledit réacteur de polymérisation.

33. Procédé selon la revendication 1, comprenant en outre le fait de:
a) procurer plusieurs chambres englobant des première et deuxième chambres parallèles l'une à l'autre, chacune étant reliée à une troisième chambre via des premier et deuxième passages respectivement, lesdites première et deuxième chambres contenant des premier et deuxième composants respectivement;
b) décharger le contenu de ladite première chambre via ledit premier passage dans ladite troisième chambre et décharger le contenu de ladite deuxième chambre via ledit deuxième passage dans ladite troisième chambre pour obtenir un mélange desdits premier et deuxième composants en mélange l'un avec l'autre dans ladite troisième chambre pour obtenir un premier temps de contact désiré; et
c) par la suite, décharger le contenu de ladite troisième chambre via un troisième passage s'étendant depuis ladite troisième chambre jusqu'à une quatrième chambre contenant un troisième composant, dans ladite quatrième chambre où il est mélangé avec ledit troisième composant de catalyseur pendant un deuxième temps de contact désiré.

34. Procédé selon la revendication 33, dans lequel ledit premier composant de catalyseur est un composant de cocatalyseur à base d'organoaluminium d'un système de catalyseur de type Ziegler, le deuxième desdits composants est un composant donneur d'électrons dudit système de catalyseur de type Ziegler et ledit troisième composant dans ladite quatrième chambre est un composant de catalyseur à base d'un métal transitoire dudit catalyseur de type Ziegler.

35. Procédé selon la revendication 26, dans lequel ledit donneur d'électrons est un organosilicium, ledit cocatalyseur est un organoaluminium, ledit organosilicium et ledit composant de catalyseur à base d'un métal transitoire sont mis en contact à l'étape (a") dans des quantités relatives pour obtenir un mélange à titre de précurseur possédant un rapport molaire du silicium au métal transitoire s'élevant à au moins 5 et dans lequel on met ledit mélange à titre de précurseur en contact avec ledit composant de cocatalyseur à base d'organoaluminium à l'étape (b") pour obtenir une formulation de catalyseur de type Ziegler comprenant ledit composant de catalyseur à base d'un métal transitoire et ledit composant donneur d'électrons dans des quantités relatives pour obtenir un rapport molaire aluminium/silicium qui n'est pas supérieur à 40.

36. Dans un procédé pour la polymérisation d'oléfines, les étapes comprenant le fait de:
(a) procurer un mélange d'une formulation de catalyseur de type Ziegler comprenant un composant de catalyseur à base d'un métal transitoire, un composant donneur d'électrons externes et un composant de cocatalyseur, qui doit être chargé dans un réacteur de polymérisation par le fait de:
(1) mettre un composant de cocatalyseur en contact avec un composant de catalyseur à base d'un métal transitoire pendant un premier temps de contact dans le domaine de 5 à 120 secondes;
(2) après l'étape (1), mettre le mélange obtenu à l'étape (1) en contact avec un composant donneur d'électrons externes pendant un deuxième temps de contact qui n'est pas supérieur à 110 secondes; et
ou
(1') mettre un composant de cocatalyseur en contact avec un composant donneur d'électrons externes pendant un premier temps de contact dans le domaine de 5 à 120 secondes;
(2') après l'étape (1'), mettre le mélange obtenu à l'étape (1') en contact avec un composant de catalyseur à base d'un métal transitoire pendant un deuxième temps de contact qui n'est pas supérieur à 110 secondes; et
ou
(1") mettre un composant de catalyseur à base d'un métal transitoire en contact avec un composant donneur d'électrons externes pendant un premier temps de contact qui n'est pas supérieur à 40 secondes;
(2") au terme du premier temps de contact, mettre le mélange obtenu à l'étape (1) en contact avec un composant de cocatalyseur pendant un deuxième temps de contact dans le domaine qui n'est pas supérieur à 20 secondes et dont la durée est inférieure à celle du premier temps de contact; et
(b) par la suite, mettre le mélange de l'étape (2), de l'étape (2') ou de l'étape (2") en contact avec un hydrocarbure insaturé pour mettre en oeuvre sa polymérisation en présence de ladite formulation de catalyseur de type Ziegler.

37. Procédé selon la revendication 36, comprenant en outre le fait de:
a) procurer plusieurs chambres reliées englobant des première et deuxième chambres possédant des premier et deuxième composants respectivement et reliées à un premier passage, une troisième chambre reliée à ladite deuxième chambre à l'aide d'un deuxième passage et une quatrième chambre reliée à ladite troisième chambre par un troisième passage et contenant un troisième composant;
b) décharger le contenu de ladite première chambre depuis ladite première chambre via ledit premier passage jusque dans ladite deuxième chambre et décharger le contenu de ladite deuxième chambre englobant lesdits premier et deuxième composants dans ladite troisième chambre via ledit deuxième passage, et maintenir lesdits premier et deuxième composants en mélange l'un avec l'autre dans ladite troisième chambre pour obtenir un premier temps de contact désiré; et
c) par la suite, décharger le contenu depuis ladite troisième chambre via ledit troisième passage jusque dans ladite quatrième chambre où il est mélangé avec ledit troisième composant pendant un deuxième temps de contact désiré;
d) décharger le contenu de ladite quatrième chambre dans un réacteur de polymérisation dans lequel on le met en contact avec un monomère oléfinique pour mettre en oeuvre la polymérisation dudit monomère.

38. Procédé selon la revendication 36, comprenant en outre le fait de:
a) procurer plusieurs chambres englobant des première et deuxième chambres parallèles l'une à l'autre, chacune étant reliée à une troisième chambre via des premier et deuxième passages respectivement, lesdites première et deuxième chambres contenant des premier et deuxième composants respectivement;
b) décharger le contenu de ladite première chambre via ledit premier passage dans ladite troisième chambre et décharger le contenu de ladite deuxième chambre via ledit deuxième passage dans ladite troisième chambre pour obtenir un mélange desdits premier et deuxième composants en mélange l'un avec l'autre dans ladite troisième chambre pour obtenir un premier temps de contact désiré; et
c) par la suite, décharger le contenu de ladite troisième chambre via un troisième passage s'étendant depuis ladite troisième chambre jusqu'à une quatrième chambre contenant un troisième composant, dans ladite quatrième chambre où il est mélangé avec ledit troisième composant de catalyseur pendant un deuxième temps de contact désiré; et
d) par la suite, décharger le contenu de ladite quatrième chambre dans un réacteur de polymérisation dans lequel on le met en contact avec un monomère oléfinique pour mette en oeuvre la polymérisation dudit monomère.
